(19) Europäisches Patentamt / European Patent Office / Office européen des brevets

(11) **EP 4 390 114 B1**

(12) **EUROPÄISCHE PATENTSCHRIFT**

(45) Veröffentlichungstag und Bekanntmachung des Hinweises auf die Patenterteilung:
**17.09.2025   Patentblatt 2025/38**

(21) Anmeldenummer: **22216455.0**

(22) Anmeldetag: **23.12.2022**

(51) Internationale Patentklassifikation (IPC):
***F03D 7/02*** (2006.01)

(52) Gemeinsame Patentklassifikation (CPC):
**F03D 7/028;** F05B 2270/1033; Y02E 10/72

(54) **VERFAHREN ZUM BETREIBEN EINER WINDENERGIEANLAGE MIT ERHÖHTER LEISTUNG**

METHOD FOR OPERATING A WIND TURBINE WITH INCREASED POWER

PROCÉDÉ DE FONCTIONNEMENT D'UNE ÉOLIENNE À RENDEMENT ACCRU

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**26.06.2024   Patentblatt 2024/26**

(73) Patentinhaber: **Wobben Properties GmbH**
**26607 Aurich (DE)**

(72) Erfinder:
• **Daboul, Hussam**
**26624 Südbrookmerland (DE)**
• **Länger-Möller, Annika**
**26603 Aurich (DE)**
• **Stemberg, Jochen**
**26607 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**US-A1- 2017 096 983     US-A1- 2018 171 978**

**Beschreibung**

Die vorliegende Erfindung betrifft ein Verfahren zum Steuern einer Windenergieanlage und die vorliegende Erfindung betrifft eine entsprechende Windenergieanlage.

Windenergieanlagen sind bekannt, sie erzeugen elektrische Leistung aus Wind. Liegt die Windgeschwindigkeit unterhalb einer Nennwindgeschwindigkeit, arbeitet die Windenergieanlage in einem Teillastbetrieb. In diesem Teillastbetrieb wird versucht, die Windenergieanlage optimal zu betreiben, sodass sie so viel Leistung aus dem Wind entnimmt, wie möglich.

Erreicht die Windgeschwindigkeit aber Nennwindgeschwindigkeit und steigt auch noch darüber, liegt ein Volllastbetrieb vor, und es wird die Windenergieanlage so betrieben, dass eine Überlastung vermieden wird, die anderenfalls zu einer Beschädigung der Windenergieanlage führen könnte und/oder die Lebensdauer der Windenergieanlage verringern könnte. Dafür ist vorgesehen, die Windenergieanlage ab Nennwindgeschwindigkeit mit einer Nenndrehzahl und einer Nennleistung zu betreiben. Die Drehzahl wird somit auf Nenndrehzahl beschränkt und die Leistung wird auf Nennleistung beschränkt. Die Drehzahl kann auch synonym als Rotordrehzahl bezeichnet werden. Die Leistung kann hier für die Generatorleistung stehen, die der Generator abgibt, oder für die Anlagenleistung, die die Windenergieanlage angibt. Besonders für einen stationären Betrieb sind diese beiden Leistungen im Wesentlichen gleich und unterscheiden sich im Wesentlichen nur durch Verlustleistung. Nachfolgend reicht es aus, eine dieser beiden Leistungen zu betrachten.

Um den Ertrag der Windenergieanlage noch weiter zu steigern, wäre es wünschenswert, noch etwas mehr Leistung als Nennleistung erzeugen zu können, wenn ausreichend Wind vorhanden ist.

Hier liegt der Gedanke zu Grunde, dass die Windenergieanlage zwar für Nennleistung und Nenndrehzahl ausgelegt ist, dieser Auslegung aber Annahmen zu Grunde liegen können, die sich verändern können. Insbesondere ist eine Temperatur von Komponenten eine begrenzende Größe. Überhitzen Komponenten, so können sie und damit die Windenergieanlage Schaden nehmen bzw. es kann die Lebensdauer der Windenergieanlage verringert werden. Somit kann in Betracht kommen, die Anlagenleistung über die Nennleistung zu erhöhen, wenn dabei aber sichergestellt wird, dass Temperaturgrenzen nicht überschritten werden. Besonders kommt in Betracht, dass die Leistung über Nennleistung erhöht werden kann, wenn niedrige Außentemperaturen vorliegen, sodass die Komponenten insgesamt besser gekühlt werden.

Es können Komponenten aber auch aus anderen Gründen als Übertemperatur geschädigt werden und es ist auch nicht jede Komponente hinsichtlich ihrer Temperatur überwachbar. Die Windenergieanlage mit einer höheren Leistung als Nennleistung zu betreiben und/oder mit einer höheren Drehzahl als Nenndrehzahl, ist somit ein Risiko, das vermieden oder reduziert werden sollte.

Ein Verfahren zum Betreiben einer Windenergieanlage oberhalb einer Nennleistung ist in US 2018171978 A1 offenbart. Der vorliegenden Erfindung liegt somit die Aufgabe zu Grunde, zumindest eines der vorstehend genannten Probleme zu adressieren. Insbesondere soll eine Lösung vorgeschlagen werden, bei der der Ertrag der Windenergieanlage gesteigert werden kann, insbesondere soll eine Lösung vorgeschlagen werden, bei der die Windenergieanlage mit höherer Leistung als Nennleistung betrieben werden kann, ohne dabei aber eine Beschädigung oder unerwünschte Reduzierung der Laufzeit der Windenergieanlage zu riskieren.

Erfindungsgemäß wird ein Verfahren gemäß Anspruch 1 vorgeschlagen. Vorgeschlagen wird somit ein Verfahren zum Steuern einer Windenergieanlage mit einem mit variabler Drehzahl betreibbaren aerodynamischen Rotor mit in ihrem Blattwinkel verstellbaren Rotorblättern und mit einem Generator zum Erzeugen einer Generatorleistung, wobei die Windenergieanlage durch eine Nenndrehzahl, eine Nennleistung und eine Nennwindgeschwindigkeit gekennzeichnet ist, bei der die Nenndrehzahl bzw. die Nennleistung erreicht werden. Die Drehzahl des aerodynamischen Rotors kann auch als Rotordrehzahl bezeichnet werden. Im Teillastbetrieb erhöhen sich Drehzahl und Leistung in Abhängigkeit von der Windgeschwindigkeit, bis sie bei Nennwindgeschwindigkeit Nenndrehzahl bzw. Nennleistung erreicht haben.

Es wird nun vorgeschlagen, dass für eine Windgeschwindigkeit oberhalb der Nennwindgeschwindigkeit die Windenergieanlage mit einer Leistung oberhalb der Nennleistung betrieben wird. Die Leistung liegt dabei um eine Erhöhungsleistung oberhalb der Nennleistung. Die Leistung bezeichnet besonders eine Anlagenleistung, für die auch die Nennleistung vorgesehen ist. Die Leistung liegt dann um eine Erhöhungsleistung oberhalb der Nennleistung. Es kann aber auch die Generatorleistung zu Grunde gelegt werden, die etwas unterhalb der Anlagenleistung liegen kann, wobei der Generator entsprechend durch eine Generatornennleistung gekennzeichnet sein kann, die entsprechend etwas unter der Nennleistung, also der Nennleistung der Windenergieanlage, also der Nennleistung der Anlagenleistung liegt. In jedem Fall geht es darum, dass die Leistung, welche von den beiden auch immer betrachtet wird, um die Erhöhungsleistung oberhalb der jeweils zutreffenden Nennleistung liegt.

Die Windenergieanlage wird also mit einer höheren Leistung betrieben als vorgesehen. Die Windenergieanlage wird dabei aber so betrieben, dass ein Schlagmoment unter einem vorbestimmten Grenzmoment bleibt. Außerdem ist vorgesehen, dass die aktuelle Verlustleistung eine vorbestimmte Verlustleistungsgrenze nicht überschreitet. Das Schlagmoment, das auch als Blattschlagmoment bezeichnet werden kann, bezeichnet ein Drehmoment an der Blattwurzel des betreffenden Rotorblattes, das im Grunde zur Druckseite des Rotorblatts gerichtet ist, also quer zur Blattsehne. Bei einem Blattwinkel von 0° ist es in axialer Richtung der Rotorachse gerichtet, bei einem Blattwinkel von 90° in Drehrichtung des Rotors. Mit anderen Worten geht es hier um eine Kraft, die der Wind in der genannten Richtung auf das Rotorblatt ausübt. Diese Kraft kann über das Rotorblatt verteilt sein und führt an der Blattwurzel, wo das Blatt an einer Rotornabe befestigt ist, zu einem Biegemoment, das dieses Schlagmoment bildet. Dieses Biegemoment bzw. Schlagmoment kann auch als Drehmoment betrachtet werden, obwohl sich in diese Richtung aber keine Drehung ergibt, da das Rotorblatt dort fest mit der Nabe verbunden ist. Das Schlagmoment führt somit zu einem auf die Rotorachse wirkendes Biegemoment, um es anschaulich auszudrücken. Die Auswirkung des Schlagmomentes auf die Rotorachse hängt von dem Blattwinkel ab.

Hier wurde besonders erkannt, dass diese mechanische Belastung eine wichtige zu begrenzende Größe ist, wenn die Anlage mit einer Leistung oberhalb der Nennleistung betrieben wird. Hier wurde auch erkannt, dass dieses Schlagmoment, und auch seine Auswirkung, also die Biegung in Richtung der Rotorachse, in großem Maße von dem aktuellen Blattwinkel abhängt. Dieses Schlagmoment kann bei Nennwindgeschwindigkeit maximal sein, denn bei Nennwindgeschwindigkeit ist ein vergleichsweise starker Wind vorhanden, nämlich Nennwind, während aber die Rotorblätter, also auch jedes einzelne jeweils betrachtete Rotorblatt, noch nicht aus dem Wind gedreht sind. Erst mit zunehmender Windgeschwindigkeit, also über die Nennwindgeschwindigkeit hinaus, werden die Rotorblätter aus dem Wind gedreht. Dadurch reduziert sich die Belastung der Blätter in Richtung der Rotorachse.

Somit wurde erkannt, dass eine thermische Betrachtung diese Situation nicht wiedergeben kann. Erhöht sich nämlich die Windgeschwindigkeit weiter, kann dieses Schlagmoment durch das Herausdrehen der Rotorblätter aus dem Wind reduziert werden. Andere Belastungen der Windenergieanlage werden dadurch aber nicht reduziert. Besonders bei Betrieb der Windenergieanlage mit Nennleistung oder darüber hängt die thermische Belastung im Wesentlichen von der erzeugten Leistung ab. Die Veränderung des Schlagmomentes und damit die damit unmittelbar zusammenhängende mechanische Belastung ist aus der Temperatur von Komponenten kaum ableitbar.

Durch das Erzeugen der Leistung entsteht aber auch Verlustleistung und diese sollte eine vorbestimmte Verlustleistungsgrenze nicht überschreiten. Die Berücksichtigung der Verlustleistung ist somit zusätzlich die Berücksichtigung, dass keine zu starke thermische Belastung auftritt. Wird die Leistung über die Nennleistung angehoben, erhöht sich auch die Verlustleistung. Die Verlustleistung ist somit ein Indikator für die elektrische Leistung und damit elektrische Belastung der Windenergieanlage. Indirekt kann über die Verlustleistung auch die thermische Belastung der Windenergieanlage betrachtet werden. Dabei ermöglicht die Betrachtung der Verlustleistung eine Gesamtbetrachtung der thermischen Belastung, statt einer punktuellen Betrachtung thermischer Einzelbelastungen durch Temperaturüberwachung von Komponenten.

Durch diese Vorschläge kann somit die Windenergieanlage auch dauerhaft oberhalb von Nennleistung betrieben werden, solange die überprüften Kriterien eingehalten werden. Es ist also darauf zu achten, das Schlagmoment unter einem vorbestimmten Grenzmoment zu halten und die aktuelle Verlustleistung eine vorbestimmte Verlustleistungsgrenze nicht überschreiten zu lassen. Dadurch ist eine Ertragssteigerung möglich, ohne dass die Lebensdauer verkürzt oder signifikant verkürzt wird und insbesondere ohne dass Schäden an der Windenergieanlage auftreten.

Gemäß einem Aspekt wird vorgeschlagen, dass, sofern die Windgeschwindigkeit ausreichend hoch ist, die Windenergieanlage dauerhaft mit einer Leistung oberhalb der Nennleistung betrieben wird, insbesondere über einen Zeitraum von wenigstens 10 Minuten, insbesondere wenigstens einer Stunde. Außerdem oder alternativ wird vorgeschlagen, dass die Erhöhungsleistung wenigstens 1% der Nennleistung beträgt, vorzugsweise wenigstens 5% und insbesondere wenigstens 8%. Die Erhöhung um die Erhöhungsleistung ist mit 1% bereits als signifikant anzusehen, bedenkt man die hohen Investitionskosten. Wird die Windenergieanlage nur mit 1% mehr Nennleistung betrieben, entspräche das einer zusätzlichen Stunde in vier Tagen. Vorzugsweise ist die Erhöhungsleistung aber wenigstens 5% höher als die Nennleistung. Das entspräche bei einer üblichen Laufzeit von 20 Jahren rechnerisch einem Zusatzbetrieb von einem weiteren Jahr. Insbesondere wird vorgeschlagen, dass die Erhöhungsleistung wenigstens 8% der Nennleistung beträgt. Hier wurde erkannt, dass selbst eine Erhöhung um 8% möglich ist, wenn die Schlaglast nicht zu groß wird und die Verlustleistung ebenfalls nicht zu groß wird, also beide genannten Grenzwerte eingehalten werden.

Insbesondere wurde erkannt, dass nicht nur eine sehr kurzfristige Erhöhung, die z.B. für das Stützen einer Netzanforderung in Betracht käme, möglich ist, sondern auch eine längerfristige Erhöhung, die zumindest über 10 Minuten geht, insbesondere über eine Stunde dauern kann. Hier ist natürlich immer die Voraussetzung, dass ausreichend Wind vorhanden ist. Somit kann der Ertrag durch eine solche dauerhafte bzw. zumindest längerfristige Erhöhung der Leistung signifikant erhöht werden.

Gemäß einem Aspekt wird vorgeschlagen, dass während die Windenergieanlage mit der Leistung oberhalb der Nennleistung betrieben wird, die Drehzahl auf Nenndrehzahl geregelt wird. Hier wurde besonders erkannt, dass auch eine sehr hohe Drehzahl eine Belastung für die Windenergieanlage sein kann, der Betrieb mit erhöhter Leistung aber auch ohne Erhöhung der Drehzahl möglich ist. Belastungen, die durch eine hohe Drehzahl auftreten können, werden dadurch berücksichtigt, dass die Drehzahl nicht über Nenndrehzahl ansteigt.

Gemäß einem Aspekt wird vorgeschlagen, dass beim Betreiben der Windenergieanlage mit einer Leistung oberhalb der Nennleistung die Verlustleistungsgrenze in Abhängigkeit von einer Kühlleistung bestimmt wird, wobei insbesondere die Kühlleistung geschätzt oder mithilfe einer Berechnungsvorschrift berechnet wird und/oder die Kühlleistung für den Generator und/oder für weitere elektrische Komponenten, insbesondere einen elektrischen Triebstrang, bestimmt wird.

Die Kühlleistung gibt Aufschluss darüber, wie stark Komponenten thermisch belastet werden. Besonders geht es hierbei um Kühlleistung, die zum Kühlen von Komponenten aktiv aufgebracht werden muss, z.B. durch Gebläse oder Umwälzpumpen bei Flüssigkeits-, insbesondere Wasserkühlung. Nimmt eine solche Kühlleistung zu, wird vorgeschlagen, die Verlustleistungsgrenze zu verringern. Zum einen kann dadurch verhindert werden, dass bei gleicher Verlustleistung eine zu hohe thermische Belastung auftritt. Zum anderen besteht auch die Gefahr, dass das Betreiben der Windenergieanlage mit erhöhter Leistung zu einer Zunahme der für die aktive Kühlung benötigten Leistung einhergeht, bis dahin, dass diese benötigte Kühlleistung die durch die Leistungserhöhung zusätzlich erzeugte Leistung erreicht oder gar überschreitet.

Die Kühlleistung kann insgesamt geschätzt werden, oder mithilfe einer Berechnungsvorschrift berechnet werden. Hier geht es besonders darum, dass nicht unbedingt zur Kühlung aufgebrachte Leistung, also bspw. die Leistungsaufnahme eines Gebläses, betrachtet werden muss, sondern die Kühlleistung aus anderen Werten abgelesen werden kann. Bspw. kann bei einer Kühlung mit einem Kühlmedium die Temperatur des Kühlmediums vor Erreichen der zu kühlenden Komponente mit der Temperatur verglichen werden, die dieses Kühlmedium nach dem Passieren der zu kühlenden Komponente hat. Zusammen mit dem Volumen des Stroms dieses Kühlmediums ist dann ein guter Rückschluss auf die Kühlleistung möglich. Hier kann eine Schätzung verwendet werden, indem bspw. ein Zustandsbeobachter eingesetzt wird, oder es können unmittelbare Berechnungsvorschriften angesetzt werden, die bspw. auf dem oben genannten Beispiel von den beiden Temperaturen des Kühlmediums und seinem Volumenstrom aufbauend die Kühlleistung unmittelbar berechnen können.

Außerdem oder alternativ wird vorgeschlagen, dass die Kühlleistung für den Generator bestimmt wird. Der Generator kann das Element der Windenergieanlage sein, das die meiste Verlustleistung erzeugt. Wird somit die Kühlleistung für den Generator bestimmt, ist zum einen oftmals dadurch der größte Anteil der Kühlleistung bestimmt. Außerdem sind Berechnungen und Schätzungen von Kühlleistung basierend auf dem Element, das die meiste Kühlleistung benötigt, am störunanfälligsten. Aus der Kühlleistung für den Generator kann zudem, bspw. basierend auf Erfahrungswerten oder voraufgenommenen Referenztabellen, auf die Kühlleistung insgesamt geschlossen werden, also unter Einbeziehung weiterer Elemente, die eine Kühlleistung benötigen. Informationen solcher Elemente, z.B. Temperatur oder Leistungsaufnahme eines elektrischen Bauteils eines Wechselrichters, können in der Referenztabelle hinterlegt sein.

Außerdem oder ergänzend wird vorgeschlagen, weitere Komponenten zu berücksichtigen, für die die Kühlleistung bestimmt wird. Dadurch kann das Ergebnis verbessert werden. Insbesondere wird vorgeschlagen, elektrische Komponenten eines elektrischen Triebstrangs zu berücksichtigen. Als elektrischer Triebstrang wird all das bezeichnet, was elektrisch vom Generator bis zum Einspeisen vorhanden ist, also quasi vom Strom durchflossen wird. Dazu gehört besonders ein Gleichrichter, ein Wechselrichter und diese beiden Elemente verbindende Kabel. Eine Netzdrossel, sofern sie nicht als Element des Wechselrichters betrachtet wird, kann ebenfalls hinzukommen und es kann auch ein Transformator hinzukommen, soweit er Teil der Windenergieanlage ist.

Auch hier treten Verlustleistungen auf. Besonders der Gleichrichter und/oder der Wechselrichter können über eine aktive Kühlung verfügen, insbesondere jeweils über ein Gebläse. Von dem ausgehend kann die jeweilige Kühlleistung bestimmt werden. Ein Verbindungskabel wird üblicherweise nicht aktiv gekühlt, es kann dennoch Aufschluss über eine Verlustleistung geben, die in einem solchen Verbindungskabel auftritt. Grundsätzlich kommt auch in Betracht, einen kleinen Anteil einer Kühlleistung für das Kabel zu berücksichtigen. Das Kabel kann nämlich Wärme abgeben und ggf. durch eine Kühlung des Innenraums der Windenergieanlage, an den sie die Wärme abgibt, indirekt zu einer Kühlleistung führen.

Gemäß einem Aspekt wird vorgeschlagen, dass das Betreiben der Windenergieanlage mit einer Leistung oberhalb der Nennleistung so erfolgt, insbesondere die Erhöhungsleistung so gewählt wird, dass ein Generatormoment ein vorbestimmbares Generatorgrenzmoment nicht überschreitet, und/oder das Generatormoment so eingestellt wird, dass das Generatorgrenzmoment nicht überschritten wird, und insbesondere das Generatorgrenzmoment in Abhängigkeit von Betriebseinstellungen und/oder Umgebungsbedingungen eingestellt wird.

Hier wurde besonders erkannt, dass auch das Drehmoment eine begrenzende Größe sein kann und besonders kritisch sein kann. Eine Leistung oberhalb der Nennleistung ist bei Nenndrehzahl, die vorzugsweise eingehalten werden soll, nur mit einem Generatormoment oberhalb des Nennmoments möglich. Daher wird das Generatormoment generell auf einen sehr hohen Wert eingestellt. Grundsätzlich kann der Generator auch bei einem Generatormoment oberhalb des Generatornennmoments betrieben werden und eine Berücksichtigung thermischer Werte verhindert eine Beschädigung des Generators.

Hier wurde aber erkannt, dass ein zusätzlicher Schutz des Generators bzw. ausdrückliche Berücksichtigung des Generatormoments einen Schutz vor Überlastungen erhöht. Besonders wurde erkannt, dass ein Belastungsproblem durch eine Generatorwechsellast auftreten kann. Eine hohe Generatorwechsellast kann sich ergeben, wenn bei Betrieb über Nennleistung plötzlich ein Anlagenstopp durchgeführt werden muss. Dann kann vorgesehen sein, das aerodynamische Moment maximal zu reduzieren, sodass der Generator und damit der aerodynamische Rotor maximal abgebremst wird, was zu hohen Belastungen, z.B. mechanischen Schwingungen, der Anlage führen kann, die dadurch noch höher sind, dass das bremsende Generatormoment über Nennmoment ist.

Eine hohe Generatorwechsellast kann besonders auch auftreten, wenn die Generatorleistung schlagartig reduziert werden muss. Hier kann das Generatormoment auf null abfallen, sodass dem aerodynamischen Moment plötzlich kein Gegenmoment mehr entgegengesetzt ist, was zu einer starken mechanischen Belastung des Rotors und dann, besonders durch Schwingungen, zu weiteren mechanischen Belastungen der Windenergieanlage führen kann.

Daher wird besonders vorgeschlagen, das maximal einzustellende Generatormoment davon abhängig von Betriebseinstellungen und/oder Umgebungsbedingungen einzustellen. Das können Einstellungen zur Netzstützung sein, die z.B. vorsehen, auf einen Netzfehler entsprechend schnell zu reagieren. Hierdurch kann erkennbar sein, ob eine schnelle Leistungsreduzierung zu erwarten ist. Umgebungsbedingungen, wie Regen, Temperatur und Sturmverhältnisse lassen Schlüsse darauf zu, ob ein Anlagenstopp zur Verhinderung einer Vogel- und/oder Fledermauskollision zu erwarten ist.

Gemäß einem Aspekt wird vorgeschlagen, dass beim Betreiben der Windenergieanlage mit einer Leistung oberhalb der Nennleistung die Verlustleistung konstant gehalten wird, insbesondere auf dem Wert der Verlustleistungsgrenze. Außerdem oder alternativ wird vorgeschlagen, dass die Verlustleistungsgrenze als von der Drehzahl abhängige Verlustleistung bestimmt wird.

Hier liegt besonders die Erkenntnis und Annahme zu Grunde, dass das überwachte Schlagmoment weiterhin unter dem vorgestimmten Grenzmoment bleibt. Dies wird also weiterhin überwacht und solange das der Fall ist, kann dann die Windenergieanlage auf einen konstanten Verlustleistungswert gesteuert oder geregelt werden. Insbesondere kann die Windenergieanlage so gesteuert oder geregelt werden, dass die Verlustleistung der Verlustleistungsgrenze entspricht. Mit anderen Worten wird dann die Verlustleistung auf den Wert der Verlustleistungsgrenze ausgeregelt.

Dadurch ist eine maximale Leistungserhöhung möglich. Es wurde erkannt, dass besonders bei Windgeschwindigkeiten nur geringfügig oberhalb der Nennwindgeschwindigkeit die Schlaglast, also das Schlagmoment, sehr hoch sein kann und die begrenzende Größe sein kann. Bei weiter ansteigenden Windgeschwindigkeiten werden die Blätter aber nach und nach aus dem Wind gedreht, wodurch das Schlagmoment verringert wird und besonders dann kann die Verlustleistung die begrenzende Größe werden. Die Anlage kann dann auf die Verlustleistungsgrenze ausgeregelt werden.

Insbesondere wird vorgeschlagen, dass die Verlustleistungsgrenze als von der Drehzahl abhängige Verlustleistung bestimmt wird. Vorzugsweise wird die Drehzahl bei hoher Leistung, also bei Erhöhung der Leistung über die Nennleistung konstant den Wert der Nenndrehzahl aufweisen. Dennoch ist es auch in dem Fall sinnvoll, wenn die Verlustleistungsgrenze in Abhängigkeit von der Drehzahl bestimmt wird, denn obwohl die Drehzahl im Grunde bekannt und vorhersagbar ist, liegt sie doch als Größe in der Anlagensteuerung vor. Das Steuerverfahren kann also diese Drehzahl als Eingangsgröße berücksichtigen. Denn obwohl die Drehzahl bekannt sein mag, hat sie großen Einfluss auf die Verlustleistung und auch überhaupt auf die Anlagenbelastung, sodass sie eine wichtige Größe zur Bestimmung der Verlustleistungsgrenze bilden kann. Außerdem kann es trotzdem vorkommen, dass die Drehzahl auch bei der vorgeschlagenen Leistungserhöhung nicht unbedingt oder immer die Nenndrehzahl aufweist.

Besonders kann die Verlustleistungsgrenze in Abhängigkeit von mehreren Größen bestimmt werden, insbesondere in Abhängigkeit von der Kühlleistung und der Drehzahl zugleich. Wenn in diesem Fall die Drehzahl konstant den Wert der Nenndrehzahl aufweist, kann die Verlustleistungsgrenze dennoch variieren, nämlich durch Variationen der Kühlleistung.

Außerdem oder alternativ wird vorgeschlagen, dass die Verlustleistungsgrenze in Abhängigkeit von wenigstens einer der Größen Windgeschwindigkeit, Außentemperatur, Drehzahl, Luftdruck und Luftdichte bestimmt wird und außerdem oder alternativ die Verlustleistungsgrenze in Abhängigkeit von einem Alterungsverlauf der Windenergieanlage vorgegeben wird, insbesondere als Verlustleistungsprofil und/oder in Abhängigkeit von einer Restdurchschlagfestigkeit.

Die Verlustleistungsgrenze in Abhängigkeit von der Windgeschwindigkeit zu bestimmen beruht auf der Erkenntnis, dass die Windgeschwindigkeit selbst zu unterschiedlichen Kühleffekten führt. Bei gleicher Außentemperatur, aber stärkerem Wind erfolgt eine größere Kühlung als bei derselben Außentemperatur und geringerem Wind. Entsprechend kann bei höherer Windgeschwindigkeit die Verlustleistungsgrenze höher gewählt werden, denn der Wind selbst führt dann mehr Verlustleistung ab.

Ebenso kann eine geringere Außentemperatur eine höhere Verlustleistungsgrenze zulassen, weil auch in diesem Fall durch die geringe Außentemperatur eine stärkere Verlustleistungsabfuhr erreicht werden kann.

Ebenfalls können Luftdruck und/oder Luftdichte die Kühlung beeinflussen und daher eine veränderte Verlustleistungsgrenze sinnvoll machen.

Vorzugsweise wird ein Alterungsverlauf der Windenergieanlage bestimmt, es wird also immer berücksichtigt, wie stark die Alterung der Windenergieanlage jeweils aktuell ist. Der Alterungsverlauf kann dadurch erkannt und verfolgt werden, dass die Windenergieanlage belastende Größen aufgenommen und entsprechend berücksichtigt werden.

Hierzu können Sondersituationen gehören, die belastend sind und entsprechend aufgenommen werden, wie bspw. ein Sturmfall oder ein Anlagennotstopp, oder eine außergewöhnliche Böe. Die Alterung wird dadurch schneller oder sie verzögert sich, wenn solche Situationen nicht bzw. weniger als erwartet auftreten.

Aber auch der normale Anlagenbetrieb beeinflusst die Alterung und kann berücksichtigt werden. Dazu gehört besonders, wie oft und/oder lange die Windenergieanlage mit welchen Windgeschwindigkeiten betrieben wurde. Auch eine Turbulenzintensität des Windes kann berücksichtigt werden und die Alterung beeinflussen.

Dadurch kann auch zu einem aktuellen Zeitpunkt beurteilt werden, ob die Alterung der Windenergieanlage schneller oder langsamer fortgeschritten ist, als dies planmäßig in dem Moment hätte sein sollen. Ist die Alterung weniger stark fortgeschritten, kann die Leistung ggf. stärker über die Nennleistung angehoben werden und das kann dadurch berücksichtigt werden, dass die Verlustleistungsgrenze verändert, in dem genannten Beispiel also erhöht wird. Ist die Alterung stärker fortgeschritten als zu dem aktuellen Zeitpunkt sein sollte, kann die Verlustleistungsgrenze verringert werden, um die Windenergieanlage entsprechend stärker zu schonen.

Gemäß einem Aspekt wird vorgeschlagen, dass

zum Betreiben der Windenergieanlage in einem Übergangsbereich für Windgeschwindigkeiten von einer unteren Übergangswindgeschwindigkeit, die unterhalb der Nennwindgeschwindigkeit liegt, bis zu einer oberen Übergangswindgeschwindigkeit, die oberhalb der Nennwindgeschwindigkeit liegt, eine Übergangsbetriebskennlinie vorgegeben wird, wobei die Übergangsbetriebskennlinie einen Blattwinkel in Abhängigkeit von einer erfassten Leistung vorgibt, der Blattwinkel mit zunehmender erfasster Leistung zunimmt, und die Windenergieanlage unter Verwendung der Übergangsbetriebskennlinie betrieben wird, bis die erfasste Leistung einen Umschaltleistungswert erreicht, der einer Summe aus Nennleistung und Erhöhungsleistung entspricht.

Die untere Übergangswindgeschwindigkeit kann im Bereich von 80% bis 90% der Nenndrehzahl liegen, insbesondere 80% oder 90% betragen. Die obere Übergangswindgeschwindigkeit kann im Bereich von 110% bis 120% der Nenndrehzahl liegen, insbesondere 110% oder 120% betragen. Hier wird zur Steuerung der Blattwinkel in Abhängigkeit von der erfassten Leistung eingestellt. Die Leistung kann sich aus einer Drehzahl-Leistungs-Kennlinie ergeben, bei der die Leistung in Abhängigkeit von der erfassten Drehzahl eingestellt wird.

Je nach Windgeschwindigkeit stellt sich also eine Drehzahl ein, zu der eine Leistung eingestellt wird, die wiederum die Drehzahl beeinflusst. Hierbei kann ein stabiler und damit stationärer Arbeitspunkt gefunden werden. Zusätzlich wird, aber erst ab einer Windgeschwindigkeit in der Nähe der Nennwindgeschwindigkeit, der Blattwinkel verstellt, um nämlich die mechanische Belastung der Anlage zu reduzieren, insbesondere um das Schlagmoment zu reduzieren. Hier wurde besonders erkannt, dass auch schon bei Windgeschwindigkeiten unterhalb der Nennwindgeschwindigkeit eine Reduzierung der mechanischen Belastung sinnvoll sein kann. Die erfasste Leistung, also die erfasste erzeugte Leistung, ist dabei ein guter Indikator, wie hoch die Belastung ist und ist eine gute Größe, um in einer Betriebsführung berücksichtigt zu werden.

Das vorgeschlagene Betreiben mit der Übergangsbetriebskennlinie wird dabei bis zu einer Leistung durchgeführt, die oberhalb der Nennleistung liegt. Die Anlage hat dann bereits die Blätter etwas aus dem Wind gedreht und kann dadurch mehr mechanische Belastung aufnehmen. Dadurch wird auch das Betreiben mit einer höheren Leistung als Nennleistung begünstigt.

Es wird besonders vorgeschlagen, dass, wenn die erfasste Leistung den Umschaltleistungswert erreicht, die Leistung nicht weiter erhöht wird und der Blattwinkel durch die Drehzahlregelung eingestellt wird, die durch Blattwinkelverstellung die Drehzahl regelt. Dadurch kann die Betriebsführung nahtlos von der Verwendung der Übergangsbetriebskennlinie zur Verwendung der Drehzahlregelung übergehen.

Es wird vorzugsweise vorgeschlagen, als ein Belastungskriterium die Erhöhungsleistung, die aktuelle Verlustleistung und/oder die vorbestimmte Verlustleistungsgrenze zu berücksichtigen.

Besonders darauf aufbauend wird vorgeschlagen, die Übergangsbetriebskennlinie in Abhängigkeit von dem Belastungskriterium einzustellen und/oder aus mehreren Vorgabebetriebskennlinien auszuwählen.

Hier wurde erkannt, dass unterschiedliche Belastungen auch bei gleicher durchschnittlicher Windgeschwindigkeit vorliegen können, wie vorstehend und nachfolgend beschrieben wurde/wird. Besonders die Berücksichtigung der Erhöhungsleistung berücksichtigt nicht nur unterschiedliche Belastungen, sondern passt die Übergangsbetriebskennlinie auch an den sich anschließenden Betrieb mit der Drehzahlregelung an. Die Drehzahlregelung setzt im Grunde an, wenn die maximale Leistung, die über der Nennleistung liegt, erreicht ist. Die kann unterschiedlich ausfallen, je nach Belastung der Windenergieanlage, und daher setzt die Drehzahlregelung dann bei unterschiedlichen Leistungshöhen an. Es ergibt sich ein durchgängiger Verlauf einer von der Windgeschwindigkeit abhängigen Leistung. Dabei kann die Variation Übergangsbetriebskennlinie erreichen, dass die unterschiedlich hohe Leistung mit unterschiedlichen Blattwinkeln erreicht wird.

Vorzugsweise wird im Übergangsbereich eine Erhöhung der Drehzahl über Nenndrehzahl zugelassen. Dadurch kann eine höhere Leistung ohne zu großes Drehmoment erreicht werden. Es hat sich auch herausgestellt, bzw. wird hier berücksichtigt, dass die Belastung bei höherer Drehzahl insgesamt geringer sein kann.

Weiter vorzugsweise wird im Übergangsbereich zusätzlich zur Übergangsbetriebskennlinie eine Drehzahl-Leistungs-Kennlinie verwendet, die eine Leistung in Abhängigkeit von einer erfassten Drehzahl einstellt. Dadurch kann die Windenergieanlage gut im Zusammenhang mit der Übergangsbetriebskennlinie betrieben werden, wie oben beschrieben wurde.

Vorzugsweise wird die Drehzahl-Leistungs-Kennlinie in Abhängigkeit von dem Belastungskriterium eingestellt und/oder aus mehreren Vorgabe-Drehzahl-Leistungs-Kennlinien ausgewählt und optional wird die Übergangsbetriebskennlinie in Abhängigkeit von der ausgewählten Drehzahl-Leistungs-Kennlinie eingestellt und/oder aus mehreren Vorgabebetriebskennlinien ausgewählt. Hierdurch können beide Kennlinien gut aufeinander abgestimmt werden.

Gemäß einem Aspekt wird vorgeschlagen, dass die Verlustleistungsgrenze, die Erhöhungsleistung und/oder Betriebseinstellungen zum Betreiben der Windenergieanlage mit einer Leistung oberhalb der Nennleistung in Abhängigkeit von einer Statortemperatur eines Stators des Generators bestimmt wird. Insbesondere wird dies zusätzlich in Abhängigkeit von einer vorbestimmten Referenzstatortemperatur und einem spezifischen Wärmekoeffizienten des Generators, insbesondere des Stators, vorgeschlagen. Außerdem oder alternativ wird vorgeschlagen, die Verlustleistungsgrenze, die Erhöhungsleistung und/oder Betriebseinstellungen in Abhängigkeit von der magnetischen Sättigung des Generators zu bestimmen.

Hier wurde besonders erkannt, dass der Zustand des Stators eine begrenzende Größe für die Erhöhung der Leistung über die Nennleistung sein kann. Dies kann dadurch berücksichtigt werden, dass die Verlustleistungsgrenze und/oder die Erhöhungsleistung in Abhängigkeit von dem Stator, nämlich einer Statortemperatur und/oder einer magnetischen Sättigung des Generators bestimmt wird.

Hier wurde zudem erkannt, dass besonders die Statortemperatur begrenzt werden sollte, da sie auch Einfluss auf den Luftspalt zwischen Rotor und Stator des Generators hat. Steigt also die Statortemperatur zu stark an oder ist sie absolut zu hoch, sollte die Erhöhungsleistung entsprechend begrenzt bzw. wieder verringert werden. Das kann dadurch erfolgen, dass die Erhöhungsleistung unmittelbar entsprechend geringer vorgegeben wird bzw. verringert wird, oder dass die Verlustleistungsgrenze verringert wird, die dann dazu führt, dass die Verlustleistung früher die Verlustleistungsgrenze erreicht, was ebenfalls zu einer Begrenzung der Erhöhungsleistung bzw. zur Verringerung der Erhöhungsleistung führt.

Hinsichtlich der magnetischen Sättigung des Generators wurde besonders erkannt, dass bei Erreichen dieser Sättigungsleistung viel mehr Verlustleistung im Generator erzeugt wird, was zu vermeiden ist, da es zum einen ineffektiv ist und zum anderen auch zu einer ungewollt hohen Temperatur im Generator führen kann.

All dies kann auch durch angepasste Betriebseinstellungen berücksichtigt werden, sodass auch für die Betriebseinstellungen, zusätzlich oder alternativ, vorgeschlagen wird, diese in Abhängigkeit von der Statortemperatur und/oder in Abhängigkeit von der magnetischen Sättigung des Generators zu bestimmen und dann einzustellen.

Gemäß einem Aspekt wird vorgeschlagen, dass die aktuelle Verlustleistung bestimmt wird und das Betreiben der Windenergieanlage mit einer Leistung oberhalb der Nennleistung in Abhängigkeit von der bestimmten aktuellen Verlustleistung gesteuert wird, wobei die aktuelle Verlustleistung insbesondere mittels einer Berechnungsvorschrift bestimmt wird oder geschätzt wird. Hier wurde erkannt, dass die aktuelle Verlustleistung eine gute Führungsgröße zum Steuern der Windenergieanlage bei über die Nennleistung erhöhter Leistungseinspeisung sein kann. Dabei ist es wichtig, dass die Verlustleistung mit verlässlichen Werten vorliegt und dafür wird dies Berechnung oder Schätzung vorgeschlagen.

Gemäß einem Aspekt wird vorgeschlagen, dass die aktuelle Verlustleistung bestimmt wird in Abhängigkeit von Betriebsparametern, die Zustände eines Betriebs der Windenergieanlage beschreiben, außerdem oder alternativ in Abhängigkeit von die Verlustleistung kennzeichnender Eigenschaften relevanter Komponenten, insbesondere jeweils einer Temperatur der relevanten Komponente, und außerdem oder alternativ in Abhängigkeit von Umweltparametern, die Zustände in einer Umgebung der Windenergieanlage beschreiben, insbesondere Windgeschwindigkeit, Außentemperatur, Luftfeuchtigkeit und/oder Luftdruck.

Hier wurde besonders erkannt, dass die aktuelle Verlustleistung sehr gut bestimmt und dann gut weiterverwendet werden kann, wenn geeignete Parameter oder andere Größen berücksichtigt werden. Besonders aus Betriebsparametern, die Zustände eines Betriebs der Windenergieanlage beschreiben, kann eine aktuelle Verlustleistung bestimmt werden. Solche Betriebsparameter können besonders die aktuelle Drehzahl, Leistung und eingestellten Blattwinkel sein. Besonders kann eine Generatorleistung, die der Generator abgibt, und eine Anlagenleistung, die die Anlage abgibt, zugleich als Betriebsparameter, die Zustände eines Betriebs der Windenergieanlage beschreiben, verwendet werden. Besonders aus der Differenz zwischen Generatorleistung und Anlagenleistung kann eine Verlustleistung bestimmt werden.

Ergänzend oder alleine können die Verlustleistung kennzeichnende Eigenschaften relevanter Komponenten betrachtet werden. Hier kommt besonders die Temperatur relevanter Komponenten in Betracht. Als relevante Komponenten sind insbesondere solche Komponenten anzusehen, die jeweils über 10% der Verlustleistung ausmachen. Insbesondere der Generator, Gleichrichter und Wechselrichter sind solche relevanten Komponenten. Die Verbindungsleitung, besonders Kabel zwischen Gleichrichter und Wechselrichter kann hinzukommen, wenn Gleichrichter und Wechselrichter örtlich getrennt sind, nämlich der Gleichrichter in der Gondel beim Generator angeordnet ist und der Wechselrichter im Turmfuß angeordnet ist. Offensichtlich ist die Verlustleistung umso höher, je höher die Temperatur solcher relevanten Komponenten ist. Dies kann nicht nur qualitativ, sondern auch quantitativ ausgewertet werden.

Umweltparameter können insbesondere ergänzend ausgewertet werden, wie Windgeschwindigkeit, Außentemperatur, Luftfeuchtigkeit und/oder Luftdruck. Aus diesen Umweltparametern können Randbedingungen abgeleitet werden, die die Verlustleistung beeinflussen. Dadurch können die Berechnungen basierend auf Betriebsparametern und/oder Eigenschaften relevanter Komponenten verbessert werden. Es kommt aber auch in Betracht, alleine aus solchen Umweltparametern auf die Verlustleistung zu schließen. Das kommt besonders dann in Betracht, wenn eine gute Simulation für die Windenergieanlage vorliegt oder gemacht werden kann. Letztlich hängt der Betrieb der Windenergieanlage fast nur von solchen Umweltparametern ab. Aus den Umweltparametern, insbesondere Windgeschwindigkeit, kann bestimmt werden, wie sich die Windenergieanlage verhalten würde, einschließlich ihrer Verlustleistung, wobei die Verlustleistung zusätzlich durch Außentemperatur beeinflusst werden kann, denn je geringer die ist, umso besser kann gekühlt werden und umgekehrt. Luftfeuchtigkeit und Luftdruck können ergänzend hinzukommen, besonders beeinflussen diese den Betrieb der Windenergieanlage. Gleiche Windgeschwindigkeit bei unterschiedlicher Luftfeuchtigkeit und/oder unterschiedlichem Luftdruck führt zu einem unterschiedlichen Betrieb der Windenergieanlage. All dies könnte in einer Simulation berücksichtigt werden und wenn diese das Anlagenverhalten einschließlich der vorgeschlagenen Leistungserhöhung berücksichtigt, kann daraus die Verlustleistung bestimmt werden.

Vorzugsweise werden aber Betriebsparameter, Eigenschaften relevanter Komponenten und Umweltparameter zusammen betrachtet, um die Verlustleistung zu bestimmen.

Damit liegt die Verlustleistung in guter Genauigkeit vor und die Leistungserhöhung kann in Abhängigkeit von dieser Verlustleistung gesteuert oder geregelt werden, sodass möglichst viel Leistungserhöhung möglich ist, ohne aber eine zu hohe Verlustleistung einzustellen, also ohne die Anlage zu gefährden.

Eine beispielhafte Berechnungsformel für die maximale Verlustleistung wird unten noch genannt und ist auch hier anwendbar. Die vorhandene Verlustleistung wird erfasst.

Gemäß einem Aspekt wird vorgeschlagen, dass die aktuelle Verlustleistung und/oder eine Komponententemperatur in Abhängigkeit von einer Luftspaltdicke des Generators bestimmt wird. Hier wurde besonders erkannt, dass die Verlustleistung die Temperatur des Generators beeinflusst. Andere Temperaturen, also Komponententemperaturen anderer Komponenten ergeben sich ebenfalls aus der Verlustleistung. Die Verlustleistung des Generators beeinflusst zwar nicht unmittelbar die Temperatur anderer Komponenten, wenn aber aufgrund einer Betriebssituation und in Abhängigkeit von Umweltparametern der Generator bspw. eine Temperaturerhöhung erfährt, so ist auch bei anderen Komponenten eine Temperaturerhöhung zu erwarten. Somit ist ein Rückschluss von dem Generator auf die Temperatur anderer Komponenten möglich. Die Komponententemperatur beinhaltet aber auch als eine Möglichkeit die Temperatur des Generators.

Daher kann die aktuelle Verlustleistung und/oder eine Komponententemperatur, also einschließlich der Temperatur des Generators, aus dem Verhalten des Generators bestimmt werden. Hier wurde besonders erkannt, dass sich Läufer und Stator eines Generators temperaturabhängig unterschiedlich stark ausdehnen. Das liegt zum einen daran, dass Stator und/oder Generator unterschiedlich gut gekühlt werden bzw. unterschiedlich gut Wärme abgeben. Außerdem liegt es daran, dass selbst bei gleicher Temperatur eine unterschiedliche Ausdehnung auftreten kann.

Das führt somit zu temperaturabhängig unterschiedlichen Luftspaltdicken. Ist der Generator als Innenläufer ausgebildet, kann eine Temperaturerhöhung dazu führen, dass der Stator besser gekühlt ist, sich daher schwächer ausdehnt und der Läufer sich daher stärker ausdehnt, wodurch die Luftspaltdicke mit zunehmender Temperatur abnimmt. Die jeweiligen Effekte sind besonders in quantitativer Hinsicht für jeden Generatortyp und Anlagentyp einzeln zu berücksichtigen.

Jedenfalls kann somit auf einfache Art und Weise, indem nämlich nur an einer Stelle die Luftspaltdicke des Generators bestimmt werden muss, die aktuelle Verlustleistung und/oder wenigstens eine Komponententemperatur bestimmt werden.

Gemäß einem Aspekt wird vorgeschlagen, dass zur Bestimmung der aktuellen Verlustleistungsgrenze Betriebsparameter mehrerer Komponenten der Windenergieanlage berücksichtigt werden, und insbesondere die Verlustleistungsgrenze so bestimmt wird, dass die berücksichtigten Betriebsparameter vorbestimmte Parametergrenzen nicht überschreiten. Solche Betriebsparameter können besonders Temperaturen, aber auch eine Magnetisierung, eine erzeugte elektromagnetische Kraft oder eine Vibrationsamplitude sein. Solche Betriebsparameter werden berücksichtigt und die aktuelle Verlustleistungsgrenze entsprechend bestimmt, nämlich so, dass die berücksichtigten Betriebsparameter vorbestimmte Parametergrenzen nicht überschreiten.

Es kommt auch in Betracht, dass dies durch eine Regelung umgesetzt wird, indem die Betriebsparameter berücksichtigt werden und dann, wenn sie zu groß sind, insbesondere, wenn wenigstens einer dieser Betriebsparameter zu groß ist, die Verlustleistungsgrenze verringert wird. Sind alle Betriebsparameter geringer als eine jeweils zulässige Grenze, kann die Verlustleistungsgrenze erhöht werden.

Insbesondere wird vorgeschlagen, dass ein Betriebsparameter, mehrere oder alle Betriebsparameter der folgenden Liste berücksichtigt werden, die folgende Betriebsparameter aufweist:

- eine Generatortemperatur,

- eine Temperatur einer Einspeiseeinheit ,

- eine Temperatur einer elektrischen Leitung, insbesondere einer Leitung zwischen dem Generator und der Einspeiseeinheit zum Übertragen elektrischer Leistung vom Generator zur Einspeiseeinheit,

- eine Temperatur einer elektrischen Drossel,

- eine Temperatur eines Sekundärkreises einer aktiven Kühlung,

- eine Magnetisierung des Generators, wobei als vorbestimmte Parametergrenze eine magnetische Sättigung verwendet wird,

- eine im Generator erzeugte elektromagnetische Kraft, und

- eine Vibrationsamplitude einer durch den Betrieb der Windenergieanlage verursachten mechanischen Vibration.

Eine Generatortemperatur sollte nicht zu groß werden und eine Temperaturgrenze kann bei 155°C liegen. Das kann eine Temperaturgrenze für die Generatortemperatur sein, aber auch für andere Elemente, insbesondere die Temperatur einer elektrischen Leitung und die Temperatur einer elektrischen Drossel. Diese Temperatur kann mit der zulässigen Temperatur einer elektrischen Isolierung zusammenhängen.

Für die Temperatur einer Einspeiseeinheit kann diese Temperaturgrenze ebenfalls gelten, bei der Temperatur einer Einspeiseeinheit kann aber eine messbare Temperatur eine geringere Grenze aufweisen, denn eine Einspeiseeinheit erzeugt besonders in ihren Halbleiterschaltern in internen Grenzschichten durch die Schaltvorgänge hohe Temperaturen im Inneren des Bauteils. Die Außentemperatur eines solchen Halbleiterbauteils sollte daher unter einer Grenze gehalten werden, die gleichzeitig eine zu hohe Temperatur im Inneren des Halbleiterbauteils verhindert. Auch hier kann die Verlustleistungsgrenze gesenkt werden, wenn eine solche Temperatur einer Einspeiseeinheit zu hoch wird.

Eine Temperatur einer elektrischen Leitung, insbesondere einer Leitung zwischen Generator und Einspeiseeinheit zum Übertragen elektrischer Leistung vom Generator zur Einspeiseeinheit sollte auch wenigstens wie oben begründet eine durch die elektrische Isolation vorgegebene Höchsttemperatur einhalten. Bei der elektrischen Leitung ist zu berücksichtigen, dass diese oftmals eine hohe Zugbelastung durch ihr eigenes Gewicht aushalten muss, wenn sie im Turm hängt. Die Verbindung der elektrischen Leitung vom Generator zur Einspeiseeinheit kann auch die Verbindung von einem aktiven Gleichrichter, der benachbart zum Generator angeordnet ist, zum Wechselrichter, der im Turmfuß angeordnet sein kann, bedeuten.

Eine elektrische Drossel kann ebenfalls eine relevante Komponente sein und ihre Temperatur hängt auch, wie die zuvor genannten Elemente, stark von der Leistung ab, denn diese wird zum Einspeisen über die elektrische Drossel geführt. Auch bei der elektrischen Drossel kann die elektrische Isolierung eine Maximaltemperatur begrenzen.

Eine Temperatur eines Sekundärkreises einer aktiven Kühlung gibt Aufschluss über die Temperatur in der Komponente, die gekühlt wird. Hier kommt insbesondere in Betracht, dass ein Primärkühlkreislauf eine zu kühlende Komponente mittels eines ersten Kühlmediums kühlt und dieses erste Kühlmedium über einen Wärmetauscher Wärme an ein zweites Kühlmedium in dem Sekundärkreis abgibt. Aus Simulationen oder vorher durchgeführten Untersuchungen sind dann Rückschlüsse aus der geringeren Temperatur des Sekundärkreises auf die höhere Temperatur der zu kühlenden Komponente möglich.

Eine Magnetisierung des Generators ergibt sich besonders im Stator durch den Statorstrom. Eine solche Magnetisierung kann gemessen werden, falls dafür Sensoren im Generator angeordnet sind. Häufig ist das aber nicht der Fall und es kann dann oder zusätzlich die Magnetisierung aus der Kenntnis des Generators, also seines Aufbaus und seiner Materialien, dem Betriebszustand des Generators, insbesondere seiner Drehzahl, und dem Statorstrom auf diese Magnetisierung geschlossen werden.

Hier wurde besonders erkannt, dass vermieden werden sollte, den Generator in der magnetischen Sättigung zu betreiben. Die magnetische Sättigung ist eine Materialeigenschaft und dadurch vorab bestimmbar bzw. bei jedem Generator zumindest beim Entwickeln jedes Generators bekannt und die soll hier für das Steuern oder Regeln der Leistungserhöhung berücksichtigt werden.

Eine im Generator erzeugte elektromagnetische Kraft sollte ebenfalls nicht zu groß werden, um mechanische Schäden oder zumindest Belastungen in Grenzen zu halten. Die im Generator erzeugte elektromagnetische Kraft kann auch aus der Kenntnis des Generators, seines Betriebszustandes, also insbesondere der Drehzahl, und dem Statorstrom abgeleitet werden. Es ist zu berücksichtigen, dass die Magnetisierung keineswegs proportional zur erzeugten elektromagnetischen Kraft ist und daher wird vorgeschlagen, diese beiden Betriebsparameter separat zu berücksichtigen. Die magnetische Kraft kann auch von der Luftspaltdicke abhängen, sodass vorgeschlagen wird, diese Luftspaltdicke zu berücksichtigen, wenn die magnetische Kraft berücksichtigt wird.

Eine Vibrationsamplitude einer durch den Betrieb der Windenergieanlage verursachten mechanischen Vibration hängt zwar auch von der Frequenz seiner Anregung und damit von der Drehzahl des Generators ab, die Amplitude kann aber auch durch eine Temperatur beeinflusst werden. Bspw. kann eine Temperaturveränderung eine mechanische Komponente in ihrer Ausdehnung minimal verändern, was zu einer Veränderung einer Reibung führen kann, wenn bspw. ein entsprechendes Lager von dieser thermischen Ausdehnung betroffen ist, wodurch Vibrationen verstärkt werden können oder ggf. sogar dann erst auftreten. Eine Vibrationsamplitude kann auch mit einer magnetischen Kraft zusammenhängen. Wird eine elektromagnetische Kraft zwischen elektromagnetischem Rotor, also einem Läufer, und dem Stator zu groß, kann sie durch die Drehung des Läufers zu einer Vibration führen.

All dies wurde erkannt und daher wird vorgeschlagen, eine Vibrationsamplitude zu berücksichtigen. Ist sie zu groß oder droht sie zu groß zu werden, wird vorgeschlagen, die Verlustleistungsgrenze zu reduzieren.

Gemäß einem Aspekt wird vorgeschlagen, dass die Erhöhungsleistung, die aktuelle Verlustleistung und/oder die Verlustleistungsgrenze und/oder das Grenzmoment für das Schlagmoment in Abhängigkeit von einem, mehreren oder allen der folgenden Kriterien, die als Bestimmungskriterien bezeichnet werden können, bestimmt wird.

Ein Bestimmungskriterium ist ein Standort der Windenergieanlage. Ein solcher Standort kann besonders durch Umgebungsparameter wie Luftdruck, mittlere Temperatur und mittlere Turbulenzintensität gekennzeichnet sein. Der Luftdruck hängt insbesondere von der Höhe des Aufstellungsortes ab. Die mittlere Temperatur u.a. von der geografischen Breite. Der Standort der Windenergieanlage kann besonders beeinflussen, ob die Windenergieanlage vergleichsweise stark oder schwach belastet ist und entsprechend kann die Erhöhungsleistung, die ebenfalls eine Belastung für die Windenergieanlage darstellt, mehr oder weniger groß ausfallen.

Ein Bestimmungskriterium kann die Windrichtung sein. Die Windrichtung kann im Zusammenhang mit dem Aufstellungsort berücksichtigt werden und Aufschluss darüber geben, ob mit mehr oder weniger stark belastendem Wind zu rechnen ist, weil aus manchen Windrichtungen aufgrund von Hindernissen turbulenterer Wind erwartet werden kann. Auch kann Luftfeuchtigkeit und/oder Temperatur von der Windrichtung abhängen, ggf. auch von Tageszeit und/oder Jahreszeit.

Die Tageszeit und/oder Jahreszeit kann auch unabhängig von der Windrichtung, also ganz generell, ein Bestimmungskriterium sein. So kann im Sommer eine höhere Belastung als im Winter erwartet werden, weil im Sommer höhere Temperaturen zu erwarten sind, die eher für einen Betrieb mit überhöhter Leistung kritisch sein können. Es kommt aber auch in Betracht, dass bei besonders kalten Aufstellungsorten im Winter die Temperatur so gering ist, dass das Material so spröde ist, dass dies keine oder keine zu starke Leistungsüberhöhung zulässt.

Eine Turbulenzintensität ist ein weiteres Bestimmungskriterium und sie beeinflusst ebenfalls die mechanische Belastung der Windenergieanlage, insbesondere der Rotorblätter. Vorzugsweise kann vorgesehen sein, das Grenzmoment bei hoher Turbulenzintensität zu verringern, um dadurch nur ein geringeres Schlagmoment zuzulassen.

Es ist zu berücksichtigen, dass ein maximales Schlagmoment eine Eigenschaft der Windenergieanlage ist, u.a. darauf ist die Windenergieanlage ausgelegt. Das Grenzmoment wird aber so vorgegeben, dass auch noch eine Toleranz eingehalten wird, damit Variationen des Schlagmomentes, besonders durch Veränderungen des Windes, besonders durch Böen, nicht zu einer zu starken Erhöhung führen. Je nach Situation, besonders je nach Windsituation, also ob der Wind eine hohe oder niedrige Böigkeit aufweist, und/oder starke oder geringe Richtungswechsel ausweist, kann aber eine größere oder kleine Toleranz ausreichen, sodass unterschiedliche Werte für das Grenzmoment verwendet werden können.

Eine Windscherung ist ein weiteres Bestimmungskriterium. Die Windscherung sagt aus, dass das Windfeld nicht homogen ist, sondern unterschiedliche Windgeschwindigkeiten in unterschiedlichen Stellen, insbesondere in unterschiedlichen Höhen auftreten und dadurch besonders zu unsymmetrischen Belastungen der Blätter und/oder des Rotors führen können. Entsprechend beeinflusst eine Windscherung auch die Belastung der Windenergieanlage insgesamt und bei starker Windscherung kann vorgesehen sein, die Erhöhungsleistung geringer zu wählen als bei schwacher Windscherung.

Ein Bestimmungskriterium kann die Umgebungstemperatur sein. die Umgebungstemperatur ist vorstehend schon genannt worden, sie kann besonders Einfluss auf die Kühlung der Windenergieanlage haben und dadurch kann die Verlustleistung besser abgeführt und die Temperatur in der Windenergieanlage geringer gehalten werden. Es wäre dann eine größere Erhöhungsleistung möglich.

Der Luftdruck ist ein weiteres Bestimmungskriterium und unterschiedliche Luftdrücke können zu unterschiedlicher Belastung der Rotorblätter führen, sodass hier die Berücksichtigung vorgeschlagen wird.

Die Luftfeuchtigkeit kann ebenfalls ein Bestimmungskriterium sein. Luftfeuchtigkeit beeinflusst ebenfalls die Kraft, die der Wind bei gleicher Windgeschwindigkeit auf ein Rotorblatt ausüben kann. Vereinfacht ausgedrückt ist feuchte Luft schwerer und kann daher zu stärkeren Kräften führen.

Gemäß einem Aspekt wird vorgeschlagen, dass zum Betreiben der Windenergieanlage mit einer Leistung oberhalb der Nennleistung Betriebseinstellungen, insbesondere der Blattwinkel, in Abhängigkeit von der aktuellen Windgeschwindigkeit und in Abhängigkeit von der Erhöhungsleistung, der aktuellen Verlustleistung und/oder der Verlustleistungsgrenze eingestellt werden und/oder die Betriebseinstellungen durch eine Berechnungsvorschrift bestimmt werden.

Es wird somit vorgeschlagen, die Windgeschwindigkeit ausdrücklich zu berücksichtigen, um die Betriebseinstellungen, insbesondere den Blattwinkel, einzustellen. Zusätzlich wird die Erhöhungsleistung, die aktuelle Verlustleistung und/oder die Verlustleistungsgrenze berücksichtigt. Somit ist eine Steuerung vorgesehen, die Betriebseinstellungen abhängig von diesen Werten auswählt oder verändert, insbesondere den Blattwinkel abhängig von diesen Größen bestimmt. Der Blattwinkel wird also in Abhängigkeit von der aktuellen Windgeschwindigkeit eingestellt und zusätzlich in Abhängigkeit von der Erhöhungsleistung, der aktuellen Verlustleistung und/oder Verlustleistungsgrenze. Somit kann ein Betriebspunkt unmittelbar vorgegeben und eingestellt werden. Das verhindert, dass durch eine Regelung Schwingungen auftreten. Auch mechanische Überlasten der Struktur werden verringert.

Gemäß einem Aspekt wird vorgeschlagen, dass zum Betreiben der Windenergieanlage in einem Sturmbetrieb, wenn die Windgeschwindigkeit über einer vorbestimmbaren Sturmwindgeschwindigkeit liegt, eine Sturmkennlinie vorgesehen ist, die einen Zusammenhang zwischen Drehzahl und Leistung vorgibt, wobei zum Steuern der Windenergieanlage in einem Übergang vom Volllastbetrieb zum Sturmbetrieb, wenn die Windenergieanlage im Volllastbetrieb mit einer Leistung oberhalb der Nennleistung betrieben wird, eine Übergangssturmkennlinie vorgesehen ist, die einen Zusammenhang zwischen Drehzahl und Leistung vorgibt, der sich von dem Zusammenhang gemäß der Sturmkennlinie unterscheidet, wobei insbesondere die Übergangskennlinie im Vergleich zur Sturmkennlinie jeweils gleichen Drehzahlwerten höhere Leistungswerte zuordnet.

Die Sturmkennlinie und auch die Übergangskennlinie können als Betriebskennlinien angesehen werden. Sie ordnen jeweils einer Drehzahl einen Leistungswert zu. Insbesondere kann vorgesehen sein, dass diese Sturmkennlinie bzw. Übergangskennlinie so umgesetzt wird, dass eine Drehzahl erfasst und davon abhängig eine Leistung eingestellt wird. Dabei kann insbesondere vorgesehen sein, dass die Windgeschwindigkeit erfasst und in Abhängigkeit von der Windgeschwindigkeit zunächst über das Verstellen der Rotorblätter die Drehzahl eingestellt wird, und dann dazu die Leistung eingestellt wird, oder dass in Abhängigkeit von der Windgeschwindigkeit Drehzahl und Leistung gemäß der Kennlinie vorgegeben werden, indem die Leistung eingestellt wird, insbesondere durch entsprechende Ansteuerung des Generators, und die Rotorblätter so eingestellt werden, dass sich dann die gewünschte Drehzahl ergibt.

Jedenfalls ordnen sowohl die Sturmkennlinie als auch die Übergangskennlinie jeweils Leistungswerten Drehzahlwerte zu. Die Kennlinie kann also durch eine Vielzahl von Drehzahlleistungspaaren dargestellt werden. Dabei ist vorgesehen, dass die Übergangskennlinie sich von der Sturmkennlinie unterscheidet. Dabei ist die Übergangskennlinie für den Fall vorgesehen, dass die Windenergieanlage im Volllastbetrieb mit einer Leistung oberhalb der Nennleistung betrieben wird. Hier geht es besonders um einen Betriebspunkt, bei dem die Windgeschwindigkeit schon recht hoch ist, quasi kurz vor der Sturmwindgeschwindigkeit.

Hier wurde besonders erkannt, dass die Sturmkennlinie dazu vorgesehen ist, ab der Sturmwindgeschwindigkeit die Leistung unter die Nennleistung und die Drehzahl unter die Nenndrehzahl zu reduzieren. Dem liegt der Gedanke zu Grunde, dass quasi am Übergangspunkt, wenn Sturmwindgeschwindigkeit vorliegt, die Leistung mit weiter zunehmender Windgeschwindigkeit unter Nennleistung zu reduzieren ist, um die Anlage zu schützen. Bei Sturmwindgeschwindigkeit ist damit die Nennleistung die maximal zulässige Leistung. Daher wurde erkannt, dass dann, wenn die Windenergieanlage im Volllastbetrieb mit einer Leistung oberhalb der Nennleistung betrieben wird, diese bei Sturmwindgeschwindigkeit zu einem Arbeitspunkt führt, der sich von dem Arbeitspunkt, also von der Kombination aus Drehzahl und Leistung gemäß Sturmkennlinie unterscheidet. Die Sturmkennlinie gibt nämlich für die Sturmwindgeschwindigkeit, zu der nämlich die Sturmkennlinie beginnt, Nennleistung.

Es wird hier vorgeschlagen, keine sprunghafte Veränderung von der erhöhten Leistung im Moment der Sturmwindgeschwindigkeit auf die Nennleistung gemäß Sturmkennlinie vorzunehmen, sondern stattdessen eine Übergangskennlinie vorzusehen. Diese Übergangskennlinie kann bei den Windgeschwindigkeiten, die über der Sturmwindgeschwindigkeit liegen, in die Sturmkennlinie übergehen, vorzugsweise unterscheiden sich die Sturmkennlinie und die Übergangskennlinie aber über die Sturmwindgeschwindigkeit hinaus, insbesondere sogar über den vollständigen Sturmbereich. Die Übergangskennlinie gibt dann also einen Zusammenhang zwischen Drehzahl und Leistung für einen Teil des oder den gesamten Sturmbereich vor, unabhängig und abweichend zur Sturmkennlinie.

Neben dem Aspekt, den genannten Sprung zu vermeiden, liegt hier auch die Erkenntnis zu Grunde, dass auch im Sturmfall noch eine höhere Leistung abgerufen werden kann, als dies mit der Sturmkennlinie vorgesehen ist. Auch hier kann ergänzend zum Betrieb mit der Übergangskennlinie die Belastung der Anlage überprüft werden. Besonders kann auch beim Betrieb mit der Übergangskennlinie geprüft werden, dass Schlaglasten und die Verlustleistung nicht zu groß werden, wobei die Verlustleistung wohl von alleine nicht zu groß werden kann, da die Leistung ohnehin reduziert ist. Sollte aber bei dieser Lastüberprüfung herauskommen, dass die vorgesehene Drehzahl und/oder Leistung gemäß der Übergangskennlinie zu groß sind, kann eine Anpassung der Übergangskennlinie vorgesehen sein.

Erfindungsgemäß wird auch eine Windenergieanlage vorgeschlagen, die wie oben erläutert ausgebildet ist und eine Steuereinrichtung zum Steuern der Windenergieanlage aufweist. Außerdem ist die Windenergieanlage dazu vorbereitet, ein Verfahren zum Steuern einer Windenergieanlage gemäß wenigstens einer der vorstehend beschriebenen Ausführungsformen auszuführen. Insbesondere ist die Steuereinrichtung dazu vorbereitet, solche Verfahren auszuführen.

Die Steuereinrichtung kann als Prozessrechner ausgebildet sein und mit den entsprechenden Elementen der Windenergieanlage gekoppelt sein. Außerdem kann eine Kopplung zu einer externen Wettervorhersage und/oder zu externen Sensoren zum Erfassen von Umgebungsparametern vorgesehen sein.

Das Verfahren kann insbesondere auf einem solchen Prozessrechner implementiert sein, insbesondere über einen Programmcode, der die entsprechenden Verfahrensschritte ausführt, wenn er auf einem Computer ausgeführt wird.

Dadurch kann eine Windenergieanlage vorgeschlagen werden, die einen erhöhten Ertrag erreichen kann, bei gleichzeitiger Vermeidung von unnötigen Überlastungen.

Die Erfindung wird nun nachfolgend anhand von Ausführungsbeispielen unter Bezugnahme auf die begleitenden Figuren exemplarisch beschrieben.

Figur 1    zeigt eine Windenergieanlage in einer perspektivischen Darstellung.

Figur 2    zeigt ein Leistungs-/Schlagmoment-Windgeschwindigkeits-Diagramm zum bisherigen Verhalten einer Windenergieanlage.

Figur 3    zeigt ein Leistungs-Windgeschwindigkeits-Diagramm zur Erläuterung der Erfindung.

Figur 4    zeigt ein Blattwinkel-Windgeschwindigkeits-Diagramm zur Erläuterung der Erfindung.

Figur 5    zeigt ein Schlagmoment-Windgeschwindigkeits-Diagramm zur Veranschaulichung der Erfindung.

Figur 6    zeigt schematisch eine Regelungsstruktur zur Erläuterung der Erfindung.

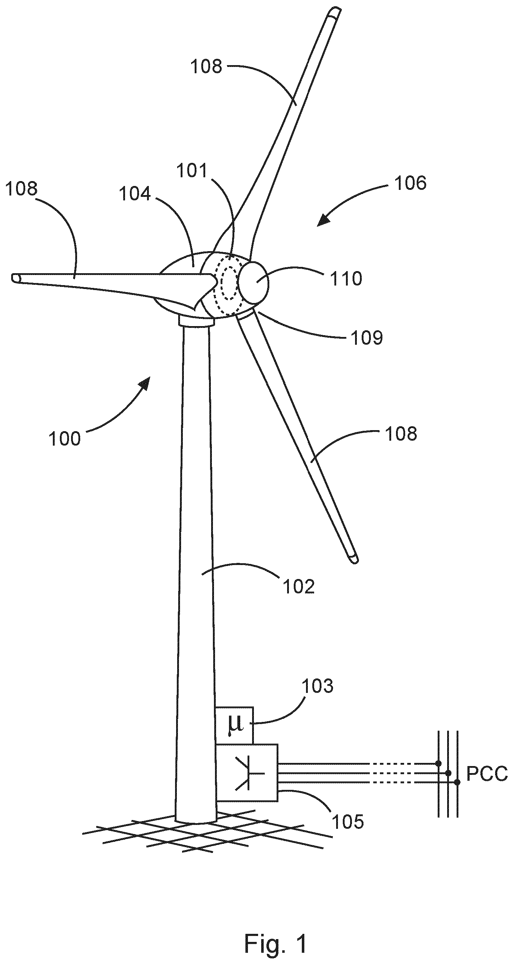

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.]

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

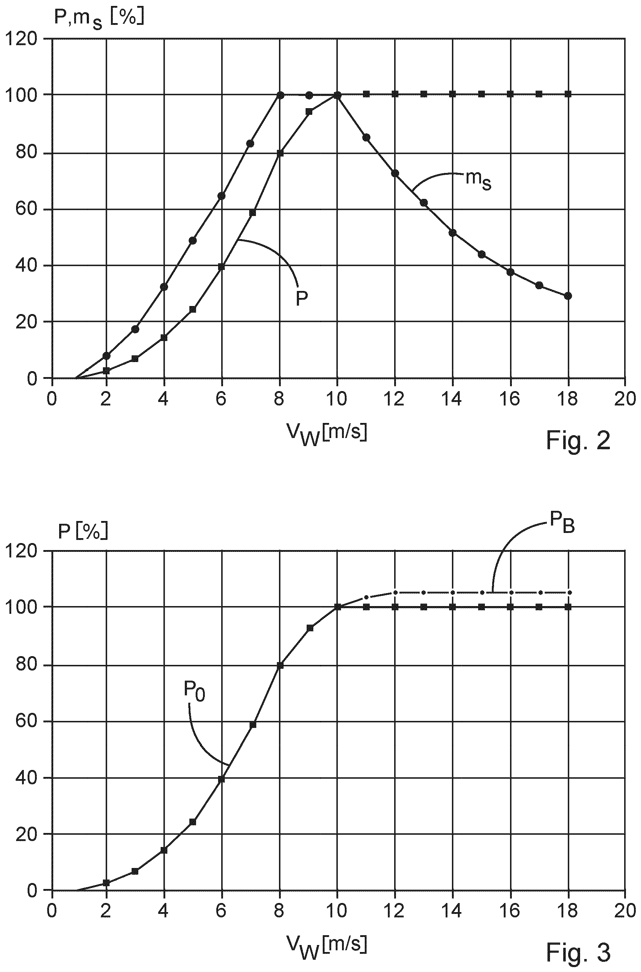

Figur 2 zeigt ein Diagramm, in dem die Leistung P und das Schlagmoment $m_S$ jeweils als Verlauf in Abhängigkeit von der Windgeschwindigkeit dargestellt sind. Die Windgeschwindigkeit ist somit in m/s an der Abszisse abgetragen und die Leistung und auch das Schlagmoment, jeweils auf Nennwerte normiert, sind an der Ordinate abgetragen.

In dem Diagramm wird von einer Nennwindgeschwindigkeit von etwa 10 m/s ausgegangen. Bis dahin liegt ein Teillastbereich vor bzw. bis dahin wird die Windenergieanlage in einem Teillastbetrieb betrieben. Die Windgeschwindigkeit P erreicht bei Nennwindgeschwindigkeit ihren Maximalwert, nämlich Nennleistung und damit 100%. Ab Nennwindgeschwindigkeit wird die Leistung auf Nennleistung gehalten.

Das Schlagmoment steigt ebenfalls im Teillastbereich mit zunehmender Windgeschwindigkeit an, erreicht allerdings bereits früher, im gezeigten Beispiel nämlich bei 8 m/s Windgeschwindigkeit seinen Maximalwert, also 100%. Dadurch werden die zertifizierten Lasten nicht überschritten. Die zunehmende Belastung durch den Wind bei weiter ansteigender Windgeschwindigkeit wird durch das Verstellen der Rotorblätter kompensiert, sodass das Schlagmoment auf seinem Maximalwert von 100% zunächst verbleibt.

Bei Nennwindgeschwindigkeit von im Beispiel 10 m/s werden die Rotorblätter stärker verstellt, um auch die Leistung auf ihrem Nennwert, also bei 100% zu halten. Das führt dazu, dass ab Nennwindgeschwindigkeit das Schlagmoment mit weiter steigender Windgeschwindigkeit abnimmt.

Es wurde erkannt, dass diese Abnahme des Schlagmomentes mit weiter steigender Windgeschwindigkeit ab Nennwindgeschwindigkeit die Möglichkeit eröffnet, die Leistung doch über Nennleistung anzuheben. Zumindest diese mechanische Belastung der Schlagmomente lässt das zu. Dabei wurde besonders erkannt, dass das Schlagmoment recht stark abnimmt. Diese Möglichkeit der Leistungserhöhung soll ausgenutzt werden, wobei aber andere begrenzende Kriterien zu berücksichtigen sind.

Figur 3 zeigt einen Leistungsverlauf in Abhängigkeit von der Windgeschwindigkeit, wobei die Normalleistung $P_0$ und die erhöhte Leistung $P_B$ dargestellt sind. Beide Leistungsverläufe verlaufen bis zur Nennwindgeschwindigkeit bei den beispielhaften 10 m/s gleich. Ab dann kann die erhöhte Leistung größere Werte annehmen, sodass die erhöhte Leistung $P_B$ ab Nennwindgeschwindigkeit noch etwas ansteigt. Sie erreicht aber bald ein Plateau, das besonders dadurch begründet ist, dass andere Begrenzungen zu beachten sind, besonders elektrische und/oder thermische Begrenzungen, die mit der Leistung zusammenhängen.

Dennoch veranschaulicht die Figur 3, dass Leistungserhöhungen von 5% und mehr erreichbar sind. Figur 3 veranschaulicht außerdem, dass die Leistungserhöhung nicht nur für einen kleinen Bereich möglich ist, sondern für den gesamten Volllastbereich in Betracht kommen kann. Und insoweit geht das Diagramm der Figur 3 und damit auch der Bereich der erhöhten Leistung etwa bis zum Ende des Volllastbereichs, an den sich ein Sturmbereich anschließt, der in diesem Diagramm allerdings nicht dargestellt ist.

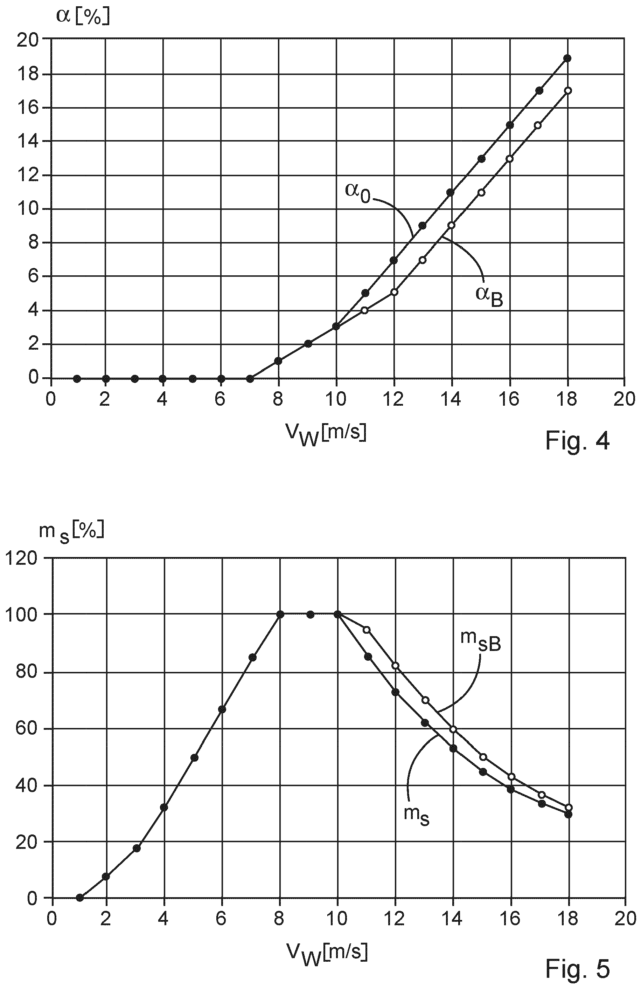

Figur 4 zeigt den Verlauf eines Blattwinkels in Abhängigkeit von der Windgeschwindigkeit, wobei ein normaler Blattwinkelverlauf $\alpha_0$ und ein Blattwinkelverlauf $\alpha_B$ für eine erhöhte Leistung dargestellt ist. Es ist zu erkennen, dass beide Blattwinkelverläufe bis zur Nennwindgeschwindigkeit der beispielhaften 10 m/s gleichlaufen.

Ab der Nennwindgeschwindigkeit wird der Blattwinkel gemäß dem Blattwinkel $\alpha_B$ für die erhöhte Leistung zunächst schwächer erhöht als der Normalblattwinkelverlaub $\alpha_0$. Ab einer gewissen Windgeschwindigkeit, die in dem Beispiel 12 m/s beträgt, verlaufen dann aber beide Blattwinkelverläufe parallel zueinander. Sie verlaufen ab der Windgeschwindigkeit parallel zueinander, ab der auch die erhöhte Leistung ein Plateau erreicht hat und damit die erhöhte Leistung parallel zur nicht erhöhten Leistung, also parallel zum Wert der Nennleistung verläuft.

In beiden Fällen werden also die Rotorblätter mit zunehmender Windgeschwindigkeit weiter aus dem Wind gedreht, sodass auch entsprechend eine Belastungsreduzierung erfolgt. Für den Blattwinkel $\alpha_B$ für die erhöhte Leistung sind die Blattwinkelwerte aber etwas geringer, sodass also die Blätter jeweils etwas weniger aus dem Wind gedreht sind als bei dem normalen Blattverlauf $\alpha_0$.

Figur 5 zeigt ein Diagramm, in dem das Schlagmoment in Abhängigkeit von der Windgeschwindigkeit dargestellt ist. Auch hier ist der Normalverlauf mit dem Verlauf für erhöhte Leistung gegenübergestellt. Der Normalverlauf zeigt somit das Blattschlagmoment $m_S$ und der Verlauf für die erhöhte Leistung zeigt das Schlagmoment $m_{SB}$.

Der Verlauf des normalen Schlagmoments $m_S$ entspricht somit auch dem Verlauf des Schlagmoments gemäß Figur 2.

Das Schlagmoment $m_{SB}$ gemäß erhöhter Leistung nimmt ebenfalls ab Nennwindgeschwindigkeit mit zunehmender Windgeschwindigkeit ab, aber nicht so stark. Dennoch nimmt es erheblich ab, sodass die Leistungserhöhung, die dem Schlagmoment $m_{SB}$ zu Grunde liegt, kein Belastungsproblem für das Schlagmoment darstellt.

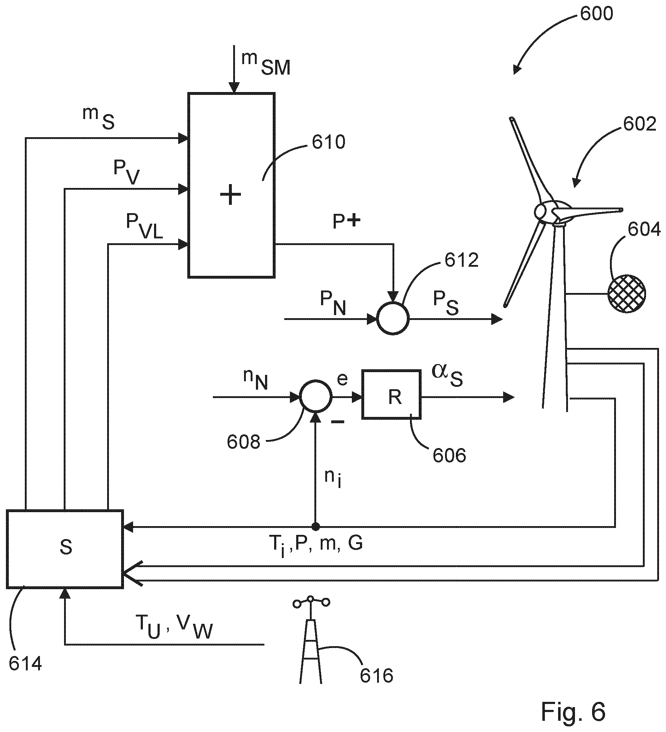

Figur 6 zeigt schematisch eine Regelungsstruktur 600 mit einer schematisch angedeuteten Windenergieanlage 602, die ebenfalls nur schematisch angedeutet in ein elektrisches Versorgungsnetz 604 einspeist.

Die Struktur veranschaulicht, dass die Windenergieanlage 602 im Grunde dadurch gesteuert wird, dass sie einen Leistungssollwert $P_S$ und einen Blattwinkelsollwert $\alpha_S$ erhält. Der Blattwinkel ist das Ergebnis einer Drehzahlregelung mit Drehzahlregler 606. Der Drehzahlregler 606 erhält eine Drehzahldifferenz, die an der ersten Summierstelle 608 aus der Solldrehzahl, die hier als Nenndrehzahl $n_N$ vorgegeben wird, und der Istdrehzahl $n_i$ gebildet wird. Der sich ergebende Regelfehler e wird also in den Drehzahlregler 606 eingegeben und davon abhängig wird ein einzustellender Blattwinkel $\alpha_S$ bestimmt. Eine häufige Anwendung kann auch so ausgestaltet sein, dass statt eines absoluten Blattwinkels $\alpha_S$ eine Blattwinkelverstellrate ausgegeben wird. Dafür soll auch der Blattwinkel $\alpha_S$ repräsentativ stehen.

Zur Steuerung der Leistungserhöhung wird vorzugsweise vorgeschlagen, dass die Drehzahl nicht erhöht wird und nur die Leistung erhöht wird. Der gezeigte Drehzahlregler kann somit im Falle der Leistungserhöhung über die Nennleistung hinaus normal weiterbetrieben werden. Allerdings werden sich andere Werte für den Blattwinkel ergeben, weil das Erhöhen der Leistung, das gleich noch erläutert wird, die Drehzahl bremst, sodass die Blattwinkel weniger verstellt werden müssen, um die gleiche Drehzahl zu erhalten.

Die Leistungssteuerung erfolgt im Grunde so, dass eine gewünschte Leistung als Leistung $P_S$, also als Sollleistung, vorgegeben wird. Diese Leistungsvorgabe kann in einer Betriebsführung vorgegeben werden, was der Einfachheit halber in Figur 6 nicht dargestellt ist. Im Volllastbetrieb, noch vor dem Sturmbetrieb, wird aber als Sollleistung Nennleistung $P_N$ vorgegeben. In diesem Fall entspricht, wenn keine Leistungserhöhung vorgeschlagen wird, die Sollleistung $P_S$ der Nennleistung $P_N$.

Zum Erhöhen der Leistung ist der Leistungserhöhungsblock 610 vorgesehen. Der Leistungserhöhungsblock 610 berechnet somit eine mögliche Erhöhungsleistung $P^+$, die in der zweiten Summierstelle 612 auf die vorgegebene Leistung, hier also die Nennleistung $P_N$ aufaddiert wird. Dadurch kann sich ein größerer Wert für die Sollleistung $P_S$ als die Nennleistung $P_N$ ergeben.

Zur Berechnung dieser Erhöhungsleistung $P^+$ wird ein maximales Schlagmoment $m_{SM}$ berücksichtigt, das somit ein Grenzmoment für das Schlagmoment bildet. Dieser Wert wird symbolisch in der Figur 6 in den Leistungserhöhungsblock 610 eingegeben. Da dieser Wert ein fester Wert sein kann, kann er auch fest implementiert sein, was mit dieser symbolischen Darstellung der Eingabe des maximalen Schlagmomentes $m_{SM}$ beinhaltet sein soll.

Außerdem wird eine vorbestimmte Verlustleistungsgrenze $P_{VL}$ berücksichtigt. Diese Verlustleistungsgrenze, die einen Maximalwert für die Verlustleistung vorgibt, kann variabel sein und ihre Berechnung wird unten noch erläutert.

Um diese beiden Maximalwerte, also das maximale Schlagmoment $m_{SM}$ und die Verlustleistungsgrenze $P_{VL}$ zu berücksichtigen, werden die entsprechenden Messwerte bzw. erfassten Werte betrachtet und ebenfalls in den Leistungserhöhungsblock 610 eingegeben. Somit werden dort also das aktuelle Schlagmoment $m_S$ und die aktuelle Verlustleistung $P_V$ in den Leistungserhöhungsblock 610 eingegeben.

Der Leistungserhöhungsblock 610 berücksichtigt das entsprechend, nämlich so, dass das aktuelle Schlagmoment $m_S$ das maximale Schlagmoment $m_{SM}$ nicht überschreitet. Außerdem wird die Erhöhungsleistung $P^+$ so vorgegeben, dass die aktuelle Verlustleistung $P_V$ die Verlustleistungsgrenze $P_{VL}$ nicht überschreitet.

Zur Bestimmung des aktuellen Schlagmomentes $m_S$ und der aktuellen Verlustleistung $P_V$ ist ein Bestimmungsblock 614 vorgesehen. Dieser Bestimmungsblock 614 kann viele Werte erhalten, die an der Windenergieanlage erfasst wurden. Dazu können diverse Komponententemperauren gehören, für die hier symbolisch und repräsentativ die Temperatur $T_i$ steht. Außerdem kann der Bestimmungsblock 614 die aktuelle Leistung P erhalten, das aktuelle Drehmoment des Generators m und diverse andere Größen des Generators, für die eine Generatorgröße G symbolisch aufgeführt ist. Es können auch noch weitere Werte aufgenommen werden, wie Betriebszustände von Hilfseinrichtungen wie z.B. einem Gebläse einer Kühlung, oder einer Umwälzpumpe eines Kühlkreislaufs mit flüssigem Medium. All diese Größen, und insbesondere zusätzlich die erfasste Drehzahl $n_i$ werden in diesem Bestimmungsblock 614 eingegeben.

Der Bestimmungsblock 614 kann zudem Umgebungsparameter wie eine Außentemperatur $T_U$ oder eine Windgeschwindigkeit $V_W$ von einem Messmast 616 erhalten. Solche und andere Umgebungsparameter können aber auch von der Windenergieanlage bestimmt werden, bei bspw. durch auf der Gondel angeordnete Sensoren.

Der Bestimmungsblock 614 kann besonders die aktuellen Werte des Blattschlagmomentes $m_s$ und der Ver-lustleistung $P_V$ bestimmen. Dafür kann jeweils ein Schätzalgorithmus vorgesehen sein, oder ein regelungstechnischer Schätzer verwendet werden wie bspw. ein Zustandsbeobachter.

In dem Bestimmungsblock wird außerdem die Verlustleistungsgrenze $P_{VL}$ bestimmt. Auch sie kann von vielen dieser Messwerte der Windenergieanlage 602 abhängen.

Der Bestimmungsblock 614 bestimmt also das aktuelle Blattschlagmoment $m_S$, die aktuelle Verlustleistung $P_V$ und eine maximale Verlustleistung $P_{VL}$, die die Verlustleistungsgrenze bildet. Wenn in einer anderen Ausgestaltung das maximale Blattschlagmoment $m_{SM}$ ebenfalls variabel eingestellt werden soll, insbesondere in Abhängigkeit von Situationen oder Zuständen der Windenergieanlage, könnte es auch von dem Bestimmungsblock 614 bestimmt werden.

Erfindungsgemäß wurde zudem das Folgende erkannt bzw. wird das Folgende vorgeschlagen.

Es wurde erkannt, dass die limitierenden Faktoren für die maximal mögliche Leistung in einer Windenergieanlage, die auch als WEA abgekürzt werden kann, in folgenden drei Kategorien zusammengefasst werden können:

| | |
|---|---|
| Kategorie 1: | Lasten: Besonders die maximale Schlaglast, und das maximale Drehmoment, definieren die Lasten. Sie sind limitiert durch die zertifizierten Lasten. |
| Kategorie 2: | Netzbeschränkungen: Das elektrische Versorgungsnetz, kann eine maximal einzuspeisende Leistung vorgeben. Diese wird häufig vorab definiert, und hängt besonders auch vom Netzanschlusspunkt ab. |
| Kategorie 3: | Betriebsparameter: Betriebsparameter aller Komponenten der Windenergieanlage können Begrenzungen erforderlich machen. Insbesondere Drehzahl, magnetische Sättigung und Temperaturen verschiedener Komponenten, um |

nur einige Beispiele zu nennen, können begrenzende Betriebsparameter sein.

Um die Leistung, besonders auch unabhängig von der Dauer außerhalb des nominalen Bereichs zu erhöhen, dürfen die Grenzen in allen drei o.g. Kategorien nicht verletzt werden.

Die Figur 2 zeigt somit den Verlauf des Blattschlagmomentes und der Leistung über der Windgeschwindigkeit für eine mögliche Windenergieanlage gemäß einer Simulation. Es ist darauf also zu erkennen, dass das Schlagmoment $m_S$, das somit eine Last ist, schon vor Erreichen der nominalen Windgeschwindigkeit, hier 10 m/s, seinen Maximalwert erreicht, und danach bedingt durch die Pitchführung, die sich aus der Drehzahlregelung ergeben kann, absinkt. In dieser Anmeldung wird besonders der Bereich oberhalb der Nennwindgeschwindigkeit von 10 m/s betrachtet. Damit werden die zertifizierten Lasten nicht überschritten.

Sollte sich zeigen, dass im Windgeschwindigkeitsbereich oberhalb der Nominalwindgeschwindigkeit, bei der die Windkraftanlage ihre Nennleistung erreicht, unter bestimmten Umständen ein größeres, als das Auslegungsdrehmoment des Rotors und damit auch eine höhere Leistung als die Nennleistung des Generators erwünscht ist, kann diese durch eine gezielte Anpassung der Pitchregelung erzeugt werden, was ebenfalls Figur 2 veranschaulichen soll.

Hierzu werden die Pitchparameter so geändert, dass im Bereich oberhalb der Nominalwindgeschwindigkeit an den Rotorblättern größere Betriebsanstellwinkel gefahren werden, was zu dem Resultat gemäß Figur 3 führt. Dadurch wird der Auftrieb, und damit das Drehmoment des Rotors bei gleicher Drehzahl erhöht. Die Anstellwinkel werden dabei aber nur in dem Maße erhöht, dass sichergestellt ist, dass die maximal zulässigen Blattschlaglasten nicht überschritten werden, was Figur 4 veranschaulichen soll. Die Rotordrehzahl bleibt bei diesem Vorgehen im Vergleich zur Standardauslegung in der Regel unverändert.

Die Anpassung der Pitchparameter kann je nach gefordertem Drehmoment und geforderter Leistung auch graduell erfolgen. Die Pitchparameter können die jeweils eingestellten Blattwinkel bezeichnen und sie können über eine Drehzahlregelung eingestellt werden.

Um die maximal zulässige einzuspeisende Leistung über die nominale Leistung der Windenergieanlage zu erhöhen, kann vorgesehen sein, diese Erhöhung mit Netzbetreibern oder anderen Behörden abzustimmen.

Erfindungsgemäß wird besonders vorgeschlagen, eine Betriebsführung zu entwickeln, die die zulässigen Betriebsparameter für alle relevanten Komponenten nicht überschreitet, während die Bedingungen der Kategorien 1 und 2 (Lasten und Netzbeschränkungen) erfüllt sind. In dieser Anmeldung werden unterschiedliche Methoden zur Erhöhung der Leistung definiert, ohne dass die Windenergieanlagen-Komponenten beschädigt werden.

Es werden unterschiedliche Methoden oder Teilansätze vorgeschlagen, um die möglichen Steuerparameter zu definieren.

Die folgende Methode berücksichtigt einen Komponentenwirkungsgrad bzw. elektrische Verluste.

Die elektrischen Verluste einer Windenergieanlagen Komponente z.B. des Stators eines Generators, können durch Messung ermittelt werden. Eine vordefinierte maximal erlaubte Verlustleistung kann in Abhängigkeit von Windgeschwindigkeit, Rotationsgeschwindigkeit, also Rotordrehzahl, atmosphärischem Druck und atmosphärischer Dichte definiert bzw. vorbestimmt werden. Diese Information kann schon in einer Betriebsführung für Normalwerte von Druck und Dichte enthalten sein und ggf. für andere Werte von Druck und Dichte erweitert werden

Bei der folgenden Methode wird eine Regelung eingesetzt.

Die reale Verlustleistung kann unter Verwendung der folgenden Formel ermittelt werden:

$$Pv,max = (((((R_{real}/R20) - 1)/f) + 20) - (p/R.\rho))/\alpha$$

Pv,max: ist die max. erlaubte Verlustleistung einer Komponente, Einheit [W]

R$_{real}$: ist der gemessene elektrische Widerstand der Komponente, Einheit [ohm]

R20: ist der elektrische Widerstand bei 20°C, Einheit [ohm]

f: ist ein Korrekturfaktor, der als 0,004 angenommen werden kann.

p: ist atmosphärischer Druck, Einheit [Pa]

R: ist eine Gaskonstante, die für Luft 287 J/kg.K beträgt

$\rho$: ist die Luftdichte [kg/m$^3$]

$\alpha$: ist ein Neigungsfaktor. Kann für eine Komponente durch Simulations- bzw. Messdaten ermittelt werden.

Es werden verschiedene Möglichkeiten vorgeschlagen, die Anlage zu steuern:

1. Die Verlustleistung kann konstant gehalten werden

2. Es wird eine drehzahlabhängige maximale Verlustleistung festgelegt. Die maximal zulässige Verlustleistung kann unter Berücksichtigung der folgenden Formel ermittelt werden:

$$P_{vr} = (T_{st} - T_{ref})/\alpha_{spez}$$

mit der Verlustleistung $P_{vr}$, der maximalen Statortemperatur $T_{st}$, der Referenztemperatur $T_{ref}$, und dem spezifi-

schen Wärme-Koeffizienten $\alpha_{spez}$.

$T_{st}$ und $\alpha_{spez}$ hängen allein von der turbinentypspezifischen Konfiguration bzw. den verwendeten Materialien ab.

3. Es wird eine windgeschwindigkeits- und drehzahlabhängige Verlustleistung festgelegt. Das ist vor allem vorteilhaft bei Komponenten, die teilweise oder vollständig durch die Außenluft direkt gekühlt werden. Da der Generator deutlich mehr Verlustleistung mit steigender Windgeschwindigkeit tolerieren kann.

4. Es wird eine maximale Verlustleistung bzw. ein Verlustleistungsprofil durch Alterungsformel wie z.B. Arrhenius-Formel festgelegt. Die Alterungsformeln können anhand Eingabedaten über die erwartete Temperaturverteilung in einer elektrischen Komponente, die Restdurchschlagfestigkeit der Isolierung nach vordefinierten Anzahl an Betriebsstunden/Jahren angewendet werden. Die Durchschlagfestigkeit der Isolierung einer elektrischen Komponente, insbesondere von Generator und Drossel, um nur einige Beispiele zu nennen, sinkt mit der Zeit, besonders bei hoher oder höherer Belastung, und darf eine bestimmte Grenze, z.B. 60% vom Anfangswert, nicht unterschreiten. Damit kann die Restdurchschlagfestigkeit die Lebensdauer der Komponente bei einem bestimmten Lastprofil beeinflussen oder vorgeben.

Die nachfolgende Möglichkeit berücksichtigt den Generatorluftspalt.

Eine mögliche Lösung besteht in der Regelung einer temporären Leistungserhöhung auf dem Luftspalt zwischen Rotor und Stator des Generators. Die temporäre Leistungserhöhung kann auch als temporärer Power Boost bezeichnet werden. Dazu kann ein optisches Messsystem im Generator installiert werden und permanent die Luftspaltgröße bestimmen, insbesondere einen Abstand zwischen Rotor und Stator.

Geht man davon aus, dass die Ausdehnung eines Körpers proportional zur Temperaturänderung ist, reduziert sich der Luftspalt bei einer Erwärmung des Generators linear

$$L_{rot}(T) = L_{rot}(Tref) \cdot [1 + \alpha_{rot}(T - Tref)]$$

$$L_{stat}(T) = L_{stat}(Tref) \cdot [1 + \alpha_{stat}(T - Tref)]$$

Darin ist L der Durchmesser des Generators, $\alpha_{rot}$, $\alpha_{stat}$ der Wärmeausdehnungskoeffizient, T die Temperatur des Generators. Die Indizes rot und stat beziehen sich auf den Rotor und Stator des Generators. Ref bezeichnet die Referenzwerte.

Damit kann man den Luftspalt berechnen zu

$$d = L_{rot} - L_{stat} = L_{rot}(Tref) - L_{stat}(Tref) + [\alpha_{rot} - \alpha_{stat}] \cdot (T - T_{ref})$$

Nun ist es möglich über Simulationen, Kalibrierungsmessungen oder zulässigen Maximaltemperaturen der Materialien den zulässigen minimalen Luftspalt zu ermitteln. Wird der gemessene Luftspalt im Betrieb der Anlage unterschritten, ist die Grenze des temporären Power Boost bzw. der temporären Leistungserhöhung erreicht und die erzeugte Leistung muss zurückgefahren werden. Dabei ist es möglich eine Drehzahlabhängige Vorgabe für den minimalen Luftspalt vorzugeben.

**Patentansprüche**

1. Verfahren zum Steuern einer Windenergieanlage (100; 602) mit einem mit variabler Drehzahl betreibbaren aerodynamischen Rotor (106) mit in ihrem Blattwinkel ($\alpha_B$) verstellbaren Rotorblättern (108), und mit einem Generator (101) zum Erzeugen einer Generatorleistung, wobei die Windenergieanlage (100; 602) durch eine Nenndrehzahl ($n_N$), eine Nennleistung ($P_N$) und eine Nennwindgeschwindigkeit gekennzeichnet ist, bei der die Nenndrehzahl ($n_N$) und die Nennleistung ($P_N$) erreicht wird, und das Verfahren umfasst:

- für eine Windgeschwindigkeit oberhalb der Nennwindgeschwindigkeit,
- Betreiben der Windenergieanlage (100; 602) mit einer Leistung oberhalb der Nennleistung ($P_N$), wobei
- die Leistung um eine Erhöhungsleistung ($P^+$) oberhalb der Nennleistung ($P_N$) liegt,
- die Windenergieanlage (100; 602) so betrieben wird, dass ein Schlagmoment ($m_s$) unter einem vorbestimmten Grenzmoment bleibt, **dadurch gekennzeichnet, dass**
- eine aktuelle Verlustleistung ($P_V$) eine vorbestimmte Verlustleistungsgrenze ($P_{VL}$) nicht überschreitet.

2.  Verfahren nach Anspruch 1, **dadurch gekennzeichnet, dass**

- sofern die Windgeschwindigkeit ausreichend hoch ist
- die Windenergieanlage (100; 602) dauerhaft mit einer Leistung oberhalb der Nennleistung ($P_N$) betrieben wird, insbesondere über einen Zeitraum von wenigstens 10 Minuten, insbesondere wenigstens einer Stunde, und/oder dass
- die Erhöhungsleistung ($P^+$) wenigstens 1%, vorzugsweise wenigstens 5%, insbesondere wenigstens 8% der Nennleistung ($P_N$) beträgt.

3.  Verfahren nach Anspruch 1 oder 2, **dadurch gekennzeichnet, dass**

- während die Windenergieanlage (100; 602) mit der Leistung oberhalb der Nennleistung ($P_N$) betrieben wird, die Drehzahl auf Nenndrehzahl ($n_N$) geregelt wird.

4.  Verfahren nach einem der vorstehenden Ansprüche, **dadurch gekennzeichnet, dass**

- beim Betreiben der Windenergieanlage (100; 602) mit einer Leistung oberhalb der Nennleistung ($P_N$) die Verlustleistungsgrenze ($P_{VL}$) in Abhängigkeit von einer Kühlleistung bestimmt wird, wobei insbesondere
- die Kühlleistung geschätzt oder mit Hilfe einer Berechnungsvorschrift berechnet wird, und/oder
- die Kühlleistung für den Generator (101) und/oder weitere elektrische Komponenten, insbesondere einen elektrischen Triebstrang bestimmt wird, und/oder
- das Betreiben der Windenergieanlage (100; 602) mit einer Leistung oberhalb der Nennleistung ($P_N$) so erfolgt, insbesondere die Erhöhungsleistung ($P^+$) so gewählt wird, dass ein Generatormoment ein vorbestimmbares Generatorgrenzmoment nicht überschreitet, und/oder das Generatormoment so eingestellt wird, dass das Generatorgrenzmoment nicht überschritten wird, und insbesondere das Generatorgrenzmoment in Abhängigkeit von Betriebseinstellungen und/oder Umgebungsbedingungen eingestellt wird.

5.  Verfahren nach einem der vorstehenden Ansprüche, **dadurch gekennzeichnet, dass**

- beim Betreiben der Windenergieanlage (100; 602) mit einer Leistung oberhalb der Nennleistung ($P_N$)

  - die Verlustleistung ($P_V$) konstant gehalten wird, insbesondere auf dem Wert der Verlustleistungsgrenze ($P_{VL}$), und/oder
  - die Verlustleistungsgrenze ($P_{VL}$) als von der Drehzahl abhängige Verlustleistung ($P_V$) bestimmt wird

- die Verlustleistungsgrenze ($P_{VL}$) in Abhängigkeit von wenigstens einer Größe bestimmt wird, aus der Liste aufweisend,

  - Windgeschwindigkeit,
  - Außentemperatur,
  - Drehzahl,
  - Luftdruck und
  - Luftdichte, und/oder

- die Verlustleistungsgrenze ($P_{VL}$) in Abhängigkeit von einem Alterungsverlauf der Windenergieanlage (100; 602) vorgegeben wird, insbesondere als Verlustleistungsprofil, und/oder in Abhängigkeit von einer Restdurchschlagfestigkeit.

6.  Verfahren nach einem der vorstehenden Ansprüche, **dadurch gekennzeichnet, dass**

- zum Betreiben der Windenergieanlage (100; 602) in einem Übergangsbereich für Windgeschwindigkeiten von einer unteren Übergangswindgeschwindigkeit, die unterhalb der Nennwindgeschwindigkeit liegt, bis zu einer oberen Übergangswindgeschwindigkeit, die oberhalb der Nennwindgeschwindigkeit liegt, eine Übergangsbetriebskennlinie vorgegeben wird, wobei
- die Übergangsbetriebskennlinie einen Blattwinkel ($\alpha_B$) in Abhängigkeit von einer erfassten Leistung vorgibt,
- der Blattwinkel ($\alpha_B$) mit zunehmender erfasster Leistung zunimmt, und
- die Windenergieanlage (100; 602) unter Verwendung der Übergangsbetriebskennlinie betrieben wird, bis die erfasste Leistung einen Umschaltleistungswert erreicht, der einer Summe aus Nennleistung ($P_N$) und Erhöhungsleistung ($P^+$) entspricht, wobei insbesondere

- wenn die erfasste Leistung den Umschaltleistungswert erreicht, die Leistung nicht weiter erhöht wird und der Blattwinkel ($\alpha_B$) durch eine bzw. die Drehzahlregelung eingestellt wird, die durch Blattwinkelverstellung die Drehzahl regelt, und/oder
- als ein Belastungskriterium die Erhöhungsleistung ($P^+$), die aktuelle Verlustleistung ($P_V$) und/oder die vorbestimmte Verlustleistungsgrenze ($P_{VL}$) berücksichtigt werden, und/oder
- die Übergangsbetriebskennlinie in Abhängigkeit von dem Belastungskriterium eingestellt und/oder aus mehreren Vorgabebetriebskennlinien ausgewählt wird, und/oder
- im Übergangsbereich eine Erhöhung der Drehzahl über Nenndrehzahl ($n_N$) zugelassen wird, und/oder
- im Übergangsbereich zusätzlich zur Übergangsbetriebskennlinie eine Drehzahl-Leistungs-Kennlinie verwendet wird, die eine Leistung in Abhängigkeit von einer erfassten Drehzahl einstellt, und/oder
- die Drehzahl-Leistungs-Kennlinie in Abhängigkeit von dem Belastungskriterium eingestellt und/oder aus mehreren Vorgabe-Drehzahl-Leistungs-Kennlinien ausgewählt wird und optional
- die Übergangsbetriebskennlinie in Abhängigkeit von der ausgewählten Drehzahl-Leistungs-Kennlinie eingestellt und/oder aus mehreren Vorgabebetriebskennlinien ausgewählt wird.

7. Verfahren nach einem der vorstehenden Ansprüche, **dadurch gekennzeichnet, dass**

- die Verlustleistungsgrenze ($P_{VL}$), die Erhöhungsleistung ($P^+$) und/oder Betriebseinstellungen zum Betreiben der Windenergieanlage (100; 602) mit einer Leistung oberhalb der Nennleistung ($P_N$)
- in Abhängigkeit von einer Statortemperatur eines Stators des Generators bestimmt wird, insbesondere zusätzlich in Abhängigkeit von einer vorbestimmten Referenzstatortemperatur und einem spezifischen Wärmekoeffizienten des Generators, insbesondere des Stators und/oder
- in Abhängigkeit von einer magnetischen Sättigung des Generators bestimmt wird.

8. Verfahren nach einem der vorstehenden Ansprüche, **dadurch gekennzeichnet, dass**

- die aktuelle Verlustleistung ($P_V$) bestimmt wird und das Betreiben der Windenergieanlage (100; 602) mit einer Leistung oberhalb der Nennleistung ($P_N$), in Abhängigkeit von der bestimmten aktuellen Verlustleistung ($P_V$) gesteuert wird, wobei
- die aktuelle Verlustleistung ($P_V$) insbesondere mittels einer Berechnungsvorschrift bestimmt wird, oder geschätzt wird.

9. Verfahren nach einem der vorstehenden Ansprüche, **dadurch gekennzeichnet, dass**

- die aktuelle Verlustleistung ($P_V$) bestimmt wird in Abhängigkeit

- von Betriebsparametern, die Zustände eines Betriebs der Windenergieanlage (100; 602) beschreiben, und/oder
- von die Verlustleistung ($P_V$) kennzeichnenden Eigenschaften relevanter Komponenten, insbesondere jeweils einer Temperatur der relevanten Komponente, und/oder
- von Umweltparametern, die Zustände in einer Umgebung der Windenergieanlage (100; 602) beschreiben, insbesondere Windgeschwindigkeit, Außentemperatur, Luftfeuchtigkeit und/oder Luftdruck.

10. Verfahren nach einem der vorstehenden Ansprüche, **dadurch gekennzeichnet, dass**

- die aktuelle Verlustleistung ($P_V$) und/oder eine Komponententemperatur in Abhängigkeit von einer Luftspaltdicke des Generators bestimmt wird.

11. Verfahren nach einem der vorstehenden Ansprüche, **dadurch gekennzeichnet, dass**

- zur Bestimmung der aktuellen Verlustleistungsgrenze ($P_{VL}$) Betriebsparameter mehrerer Komponenten der Windenergieanlage (100; 602) berücksichtigt werden, und
- insbesondere die Verlustleistungsgrenze ($P_{VL}$) so bestimmt wird, dass die berücksichtigten Betriebsparameter vorbestimmte Parametergrenzen nicht überschreiten, wobei
- insbesondere ein, mehrere oder alle Betriebsparameter berücksichtigt werden aus der Liste aufweisend

- eine Generatortemperatur,

- eine Temperatur einer Einspeiseeinheit (105),
- eine Temperatur einer elektrischen Leitung, insbesondere einer Leitung zwischen dem Generator (101) und der Einspeiseeinheit (105) zum Übertragen elektrischer Leistung vom Generator (101) zur Einspeiseeinheit (105),
- eine Temperatur einer elektrischen Drossel,
- eine Temperatur eines Sekundärkreises einer aktiven Kühlung,
- eine Magnetisierung des Generators, wobei als vorbestimmte Parametergrenze eine magnetische Sättigung verwendet wird,
- eine im Generator (101) erzeugte elektromagnetische Kraft, und
- eine Vibrationsamplitude einer durch den Betrieb der Windenergieanlage (100; 602) verursachten mechanischen Vibration.

12. Verfahren nach einem der vorstehenden Ansprüche, **dadurch gekennzeichnet, dass**

- die Erhöhungsleistung ($P^+$), die aktuelle Verlustleistung ($P_V$) und/oder die Verlustleistungsgrenze ($P_{VL}$), und/oder das Grenzmoment für das Schlagmoment (ms)
- in Abhängigkeit von einem, mehreren oder allen Kriterien bestimmt wird aus der Liste aufweisend

- einen Standort der Windenergieanlage (100; 602),
- eine Windrichtung,
- Tageszeit und/oder Jahreszeit,
- eine Turbulenzintensität,
- eine Windscherung,
- eine Umgebungstemperatur,
- einen Luftdruck, und
- eine Luftfeuchtigkeit.

13. Verfahren nach einem der vorstehenden Ansprüche, **dadurch gekennzeichnet, dass**

- zum Betreiben der Windenergieanlage (100; 602) mit einer Leistung oberhalb der Nennleistung ($P_N$),
- Betriebseinstellungen, insbesondere der Blattwinkel ($\alpha_B$), in Abhängigkeit von der aktuellen Windgeschwindigkeit und

- in Abhängigkeit von der Erhöhungsleistung ($P^+$), der aktuellen Verlustleistung ($P_V$) und/oder der Verlustleistungsgrenze ($P_{VL}$) eingestellt werden, und/oder
- die Betriebseinstellungen durch eine Berechnungsvorschrift bestimmt werden.

14. Verfahren nach einem der vorstehenden Ansprüche, **dadurch gekennzeichnet, dass**

- zum Betreiben der Windenergieanlage (100; 602) in einem Sturmbetrieb, wenn die Windgeschwindigkeit über einer vorbestimmbaren Sturmwindgeschwindigkeit liegt, eine Sturmkennlinie vorgesehen ist, die einen Zusammenhang zwischen Drehzahl und Leistung vorgibt, wobei
- zum Steuern der Windenergieanlage (100; 602) in einem Übergang vom Volllastbetrieb zum Sturmbetrieb, wenn die Windenergieanlage (100; 602) im Volllastbetrieb mit einer Leistung oberhalb der Nennleistung ($P_N$) betrieben wird, eine Übergangskennlinie vorgesehen ist, die einen Zusammenhang zwischen Drehzahl und Leistung vorgibt, der sich von dem Zusammenhang gemäß der Sturmkennlinie unterscheidet, wobei insbesondere
- die Übergangskennlinie im Vergleich zur Sturmkennlinie jeweils gleichen Drehzahlwerten höhere Leistungswerte zuordnet.

15. Windenergieanlage (100; 602) mit einem mit variabler Drehzahl betreibbaren aerodynamischen Rotor (106) mit in ihrem Blattwinkel ($\alpha_B$) verstellbaren Rotorblättern (108), und mit einem Generator (101) zum Erzeugen einer Generatorleistung, wobei die Windenergieanlage (100; 602) durch eine Nenndrehzahl ($n_N$), eine Nennleistung ($P_N$) und eine Nennwindgeschwindigkeit gekennzeichnet ist, bei der die Nenndrehzahl ($n_N$) und die Nennleistung ($P_N$) erreicht werden, und wobei die Windenergieanlage (100; 602)

- eine Steuereinrichtung zum Steuern der Windenergieanlage (100; 602) aufweist, **dadurch gekennzeichnet, dass** die Windenergieanlage

- dazu vorbereitet ist, ein Verfahren zum Steuern einer Windenergieanlage nach einem der vorstehenden Ansprüche auszuführen, wobei insbesondere
- die Steuereinrichtung dazu vorbereitet ist, das Verfahren auszuführen.

**Claims**

1. A method for controlling a wind power installation (100; 602) having an aerodynamic rotor (106) which is operable at variable speed and which has rotor blades (108) which are adjustable in terms of their blade angle ($\alpha_B$), and having a generator (101) for generating a generator power, the wind power installation (100; 602) being distinguished by a nominal speed ($n_N$), a nominal power ($P_N$) and a nominal wind speed at which the nominal speed ($n_N$) and the nominal power ($P_N$) are reached, and the method comprises:

   - for a wind speed above the nominal wind speed,
   - operating the wind power installation (100; 602) at a power above the nominal power ($P_N$),
   - the power being above the nominal power ($P_N$) by a boost power ($P^+$),
   - the wind power installation (100; 602) being operated in such a way that a flapwise torque ($m_s$) remains below a predetermined limit torque, **characterized in that**
   - a prevailing power loss ($P_V$) does not exceed a predetermined power loss limit ($P_{VL}$).

2. The method as claimed in claim 1, wherein,

   - provided that the wind speed is sufficiently high,
   - the wind power installation (100; 602) is continuously operated at a power above the nominal power ($P_N$), in particular over a period of at least 10 minutes, in particular of at least one hour, and/or wherein
   - the boost power ($P^+$) is at least 1%, preferably at least 5%, in particular at least 8%, of the nominal power ($P_N$).

3. The method as claimed in claim 1 or 2, wherein,

   - while the wind power installation (100; 602) is being operated at the power above the nominal power ($P_N$), the speed is regulated to nominal speed ($n_N$).

4. The method as claimed in any of the preceding claims, wherein,

   - during operation of the wind power installation (100; 602) at a power above the nominal power ($P_N$), the power loss limit ($P_{VL}$) is determined on the basis of a cooling power, in particular
   - the cooling power being estimated or being calculated using a calculation rule, and/or
   - the cooling power for the generator (101) and/or further electrical components, in particular an electrical drive train, being determined, and/or
   - the wind power installation (100; 602) being operated at a power above the nominal power ($P_N$) in such a way, in particular the boost power ($P^+$) being chosen in such a way that a generator torque does not exceed a predeterminable generator limit torque, and/or the generator torque being set in such a way that the generator limit torque is not exceeded, and in particular the generator limit torque being set on the basis of operational settings and/or environmental conditions.

5. The method as claimed in any of the preceding claims, wherein,

   - during operation of the wind power installation (100; 602) at a power above the nominal power ($P_N$),

      - the power loss ($P_V$) is kept constant, in particular at the value of the power loss limit ($P_{VL}$), and/or
      - the power loss limit ($P_{VL}$) is determined as power loss ($P_V$) dependent on the speed,

   - the power loss limit ($P_{VL}$) being determined on the basis of at least one variable from the list comprising

      - wind speed,
      - outside temperature,
      - speed,
      - air pressure and

- air density, and/or

- the power loss limit ($P_{VL}$) being specified on the basis of an aging characteristic of the wind power installation (100; 602), in particular in the form of a power loss profile, and/or on the basis of a residual dielectric strength.

6. The method as claimed in any of the preceding claims, wherein,

- for operating the wind power installation (100; 602) in a transition range for wind speeds from a lower transition wind speed below the nominal wind speed to an upper transition wind speed above the nominal wind speed, a transition operating characteristic curve is specified,
- the transition operating characteristic curve specifying a blade angle ($\alpha_B$) as a function of a measured power,
- the blade angle ($\alpha_B$) increasing as the measured power increases, and
- the wind power installation (100; 602) being operated using the transition operating characteristic curve until the measured power reaches a switching power value which corresponds to a sum of nominal power ($P_N$) and boost power ($P^+$), in particular,
- if the measured power reaches the switching power value, the power not being increased any further and the blade angle ($\alpha_B$) being set by a or the speed regulator which regulates the speed by adjusting the blade angle, and/or
- the boost power ($P^+$), the prevailing power loss ($P_V$) and/or the predetermined power loss limit ($P_{VL}$) being considered as a loading criterion, and/or
- the transition operating characteristic curve being set on the basis of the loading criterion and/or being chosen from a plurality of default operating characteristic curves, and/or
- an increase in the speed to above nominal speed ($n_N$) being permitted in the transition range, and/or
- in the transition range, in addition to the transition operating characteristic curve, use being made of a speed-power characteristic curve which sets a power as a function of a measured speed, and/or
- the speed-power characteristic curve being set on the basis of the loading criterion and/or being chosen from a plurality of default speed-power characteristic curves and optionally
- the transition operating characteristic curve being set on the basis of the chosen speed-power characteristic curve and/or being chosen from a plurality of default operating characteristic curves.

7. The method as claimed in any of the preceding claims, wherein

- the power loss limit ($P_{VL}$), the boost power ($P^+$) and/or operational settings for operating the wind power installation (100; 602) at a power above the nominal power ($P_N$) are/is determined
- on the basis of a stator temperature of a stator of the generator, in particular additionally on the basis of a predetermined reference stator temperature and a specific thermal coefficient of the generator, in particular of the stator, and/or
- are/is determined on the basis of a magnetic saturation of the generator.

8. The method as claimed in any of the preceding claims, wherein

- the prevailing power loss ($P_V$) is determined and the operation of the wind power installation (100; 602) at a power above the nominal power ($P_N$) is controlled on the basis of the determined prevailing power loss ($P_V$),
- the prevailing power loss ($P_V$) being determined in particular by means of a calculation rule, or being estimated.

9. The method as claimed in any of the preceding claims, wherein

- the prevailing power loss ($P_V$) is determined

- on the basis of operational parameters which describe states of operation of the wind power installation (100; 602), and/or
- on the basis of properties of relevant components characterizing the power loss ($P_V$), in particular a temperature of the relevant component in each case, and/or
- on the basis of environmental parameters which describe conditions in an environment of the wind power installation (100; 602), in particular wind speed, outside temperature, humidity and/or air pressure.

10. The method as claimed in any of the preceding claims, wherein

- the prevailing power loss ($P_V$) and/or a component temperature are/is determined on the basis of an air gap thickness of the generator.

11. The method as claimed in any of the preceding claims, wherein,

- for determining the prevailing power loss limit ($P_{VL}$), operational parameters of a plurality of components of the wind power installation (100; 602) are considered, and
- in particular the power loss limit ($P_{VL}$) is determined in such a way that the considered operational parameters do not exceed predetermined parameter limits,
- in particular one, a plurality or all of the operational parameters from the following list being considered, said list comprising

- a generator temperature,
- a temperature of an infeed unit (105),
- a temperature of an electrical line, in particular a line between the generator (101) and the infeed unit (105) for transmitting electrical power from the generator (101) to the infeed unit (105),
- a temperature of an electrical inductor,
- a temperature of a secondary circuit of an active cooling system,
- a magnetization of the generator, a magnetic saturation being used as the predetermined parameter limit,
- an electromagnetic force generated in the generator (101), and
- a vibration amplitude of a mechanical vibration caused by the operation of the wind power installation (100; 602).

12. The method as claimed in any of the preceding claims, wherein

- the boost power ($P^+$), the prevailing power loss ($P_V$) and/or the power loss limit ($P_{VL}$), and/or the limit torque for the flapwise torque ($m_s$),
- are/is determined on the basis of one, a plurality or all of the criteria from the list comprising

- a site of the wind power installation (100; 602),
- a wind direction,
- time of day and/or time of year,
- a turbulence intensity,
- a wind shear,
- an environmental temperature,
- an air pressure, and
- a humidity.

13. The method as claimed in any of the preceding claims, wherein,

- for operating the wind power installation (100; 602) at a power above the nominal power ($P_N$),
- operational settings, in particular the blade angle ($\alpha_B$), are set on the basis of the prevailing wind speed and

- on the basis of the boost power ($P^+$), the prevailing power loss ($P_V$) and/or the power loss limit ($P_{VL}$), and/or
- the operational settings are determined by a calculation rule.

14. The method as claimed in any of the preceding claims, wherein,

- for operating the wind power installation (100; 602) in a storm mode when the wind speed is above a predeterminable storm wind speed, a storm characteristic curve which specifies a correlation between speed and power is provided,
- for controlling the wind power installation (100; 602) in a transition from full-load operation to storm mode when the wind power installation (100; 602) is operated in full-load operation at a power above the nominal power ($P_N$), a transition characteristic curve which specifies a correlation between speed and power, said correlation differing from the correlation according to the storm characteristic curve, is provided, in particular
- the transition characteristic curve assigning higher power values to the same speed values in each case as compared to the storm characteristic curve.

**15.** A wind power installation (100; 602) having an aerodynamic rotor (106) which is operable at variable speed and which has rotor blades (108) which are adjustable in terms of their blade angle ($\alpha_B$), and having a generator (101) for generating a generator power, the wind power installation (100; 602) being distinguished by a nominal speed ($n_N$), a nominal power ($P_N$) and a nominal wind speed at which the nominal speed ($n_N$) and the nominal power ($P_N$) are reached, and the wind power installation (100; 602)

- having a control device for controlling the wind power installation (100; 602),
**characterized in that** the wind power installation
- being set up to perform a method for controlling a wind power installation according to one of the preceding claims, in particular
- the control device being set up to perform the method.

**Revendications**

**1.** Procédé de commande d'une éolienne (100 ; 602) avec un rotor aérodynamique (106) à vitesse de rotation variable avec des pales de rotor (108) ajustables dans leur angle de pale ($\alpha_B$) et avec un générateur (101) pour générer une puissance de générateur, dans lequel l'éolienne (100 ; 602) est **caractérisée par** une vitesse de rotation nominale ($n_N$), une puissance nominale ($P_N$) et une vitesse nominale du vent à laquelle la vitesse de rotation nominale ($n_N$) et la puissance nominale ($P_N$) sont atteintes, et le procédé comprend :

- pour une vitesse du vent supérieure à la vitesse nominale,
- fonctionnement de l'éolienne (100 ; 602) à une puissance supérieure à la puissance nominale ($P_N$), dans lequel
- la puissance est supérieure d'une puissance d'augmentation ($P^+$) à la puissance nominale ($P_N$),
- l'éolienne (100 ; 602) fonctionne de telle sorte qu'un couple d'impact ($_Ss$) reste inférieur à un couple limite prédéterminé, **caractérisé en ce que**
- une perte de puissance actuelle ($P_V$) ne dépasse pas une limite de perte de puissance prédéterminée ($P_{VL}$).

**2.** Procédé selon la revendication 1, **caractérisé en ce que**

- si la vitesse du vent est suffisamment élevée
- l'éolienne (100 ; 602) fonctionne en permanence à une puissance supérieure à la puissance nominale ($P_N$), en particulier pendant une période d'au moins 10 minutes, en particulier d'au moins une heure, et/ou que
- la puissance d'augmentation ($P^+$) est d'au moins 1 %, de préférence d'au moins 5 %, en particulier d'au moins 8 % de la puissance nominale ($P_N$).

**3.** Procédé selon la revendication 1 ou 2, **caractérisé en ce que**

- pendant que l'éolienne (100; 602) fonctionne à une puissance supérieure à la puissance nominale ($P_N$), la vitesse de rotation est régulée sur la vitesse de rotation nominale (nN).

**4.** Procédé selon l'une quelconque des revendications précédentes, **caractérisé en ce que**

- lors du fonctionnement de l'éolienne (100 ; 602) à une puissance supérieure à la puissance nominale ($P_N$), la limite de puissance perdue ($P_{VL}$) est déterminée en fonction d'une puissance de refroidissement, dans lequel en particulier
- la puissance de refroidissement est estimée ou calculée à l'aide d'une règle de calcul, et/ou
- la puissance de refroidissement pour le générateur (101) et/ou d'autres composants électriques, en particulier une chaîne cinématique électrique, est déterminée, et/ou
- le fonctionnement de l'éolienne (100 ; 602) est effectué avec une puissance supérieure à la puissance nominale ($P_N$) de telle sorte, en particulier la puissance d'augmentation ($P^+$) est choisie de telle sorte qu'un couple générateur ne dépasse pas un couple limite générateur prédéterminable, et/ou le couple générateur est réglé de telle sorte que le couple limite générateur n'est pas dépassé, et en particulier le couple limite générateur est réglé en fonction de réglages de fonctionnement et/ou de conditions environnementales.

**5.** Procédé selon l'une quelconque des revendications précédentes, **caractérisé en ce que**

- lors du fonctionnement de l'éolienne (100 ; 602) avec une puissance supérieure à la puissance nominale ($P_N$)

- la perte de puissance ($P_V$) est maintenue de manière constante, notamment sur la valeur de la limite de perte de puissance ($P_{VL}$), et/ou

- la limite de perte de puissance ($P_{VL}$) est déterminée en tant que perte de puissance ($P_V$) en fonction de la vitesse de rotation

- la limite de perte de puissance ($P_{VL}$) est déterminée en fonction d'au moins une grandeur, issue de la liste présentant

- une vitesse du vent,

- une température extérieure,

- une vitesse de rotation,

- une pression atmosphérique et

- une densité de l'air, et/ou

- la limite de perte de puissance ($P_{VL}$) est spécifiée en fonction d'une évolution de vieillissement de l'éolienne (100 ; 602), notamment en tant que profil de perte de puissance, et/ou en fonction d'une résistance à la diélectrique résiduelle.

6. Procédé selon l'une quelconque des revendications précédentes, **caractérisé en ce que**

- pour faire fonctionner l'éolienne (100 ; 602) dans une plage de transition pour des vitesses de vent allant d'une vitesse de vent de transition inférieure, qui est inférieure à la vitesse de vent nominale, à une vitesse de vent de transition supérieure qui est supérieure à la vitesse de vent nominale, une courbe caractéristique de fonctionnement de transition est spécifiée, dans lequel

- la courbe caractéristique de fonctionnement de transition donne un angle de pale ($\alpha_B$) en fonction d'une puissance détectée,

- l'angle de pale ($\alpha_B$) augmente au fur et à mesure que la puissance détectée augmente, et

- l'éolienne (100 ; 602) fonctionne en utilisant la courbe caractéristique de fonctionnement de transition jusqu'à ce que la puissance détectée atteigne une valeur de puissance de commutation qui correspond à la somme de la puissance nominale ($P_N$) et de la puissance d'augmentation ($P^+$), dans lequel notamment

- lorsque la puissance détectée atteint la valeur de puissance de commutation, que la puissance n'est plus augmentée et que l'angle de pale ($\alpha_B$) est réglé par une ou la régulation de vitesse qui régule la vitesse par réglage de l'angle de pale, et/ou

- la puissance d'augmentation ($P^+$), la puissance perdue actuelle ($P_V$) et/ou la limite de puissance perdue prédéterminée ($P_{VL}$) sont prises en compte comme critère de charge, et/ou

- la courbe caractéristique de fonctionnement de transition est réglée en fonction du critère de charge et/ou est choisie parmi plusieurs courbes caractéristiques de fonctionnement spécifiées, et/ou

- une augmentation de la vitesse de rotation au-dessus de la vitesse de rotation nominale ($n_N$) est autorisée dans la plage de transition, et/ou

- une courbe caractéristique vitesse de rotation-puissance qui règle une puissance en fonction d'une vitesse de rotation détectée est utilisée dans la plage de transition en plus de la courbe caractéristique de fonctionnement de transition, et/ou

- la courbe caractéristique vitesse de rotation-puissance est réglée en fonction du critère de charge et/ou est choisie parmi plusieurs courbes caractéristiques spécification- vitesse de rotation-puissance et en option

- la courbe caractéristique de fonctionnement de transition est réglée en fonction de la courbe caractéristique vitesse de rotation-puissance sélectionnée et/ou est choisie parmi plusieurs courbes caractéristiques de fonctionnement spécifiées.

7. Procédé selon l'une quelconque des revendications précédentes, **caractérisé en ce que**

- la limite de perte de puissance ($P_{VL}$), la puissance d'augmentation ($P^+$) et/ou les réglages de fonctionnement pour faire fonctionner l'éolienne (100 ; 602) à une puissance supérieure à la puissance nominale ($P_N$) sont définis

- en fonction d'une température de stator d'un stator du générateur, en particulier en plus en fonction d'une température de stator de référence prédéterminée et d'un coefficient thermique spécifique du générateur, en particulier du stator et/ou

- sont définies en fonction d'une saturation magnétique du générateur.

8. Procédé selon l'une quelconque des revendications précédentes, **caractérisé en ce que**

- la perte de puissance= actuelle ($P_V$) est déterminée et le fonctionnement de l'éolienne (100 ; 602) est commandé avec une puissance supérieure à la puissance nominale ($P_N$), en fonction de la perte de puissance actuelle déterminée ($P_V$), dans lequel
- la perte de puissance actuelle ($P_V$) est déterminée ou estimée en particulier au moyen d'une règle de calcul.

9. Procédé selon l'une quelconque des revendications précédentes, **caractérisé en ce que**

- la perte de puissance actuelle ($P_V$) est déterminée en fonction
- de paramètres de fonctionnement qui décrivent des états de fonctionnement de l'éolienne (100 ; 602), et/ou
- des propriétés de composants pertinents caractérisant la perte de puissance ($P_V$), en particulier une température respective du composant pertinent, et/ou
- de paramètres environnementaux qui décrivent des états dans un environnement de l'éolienne (100 ; 602), en particulier la vitesse du vent, la température extérieure, l'humidité et/ou la pression atmosphérique.

10. Procédé selon l'une quelconque des revendications précédentes, **caractérisé en ce que**

- la perte de puissance actuelle ($P_V$) et/ou une température de composant sont déterminées en fonction d'une épaisseur d'entrefer du générateur.

11. Procédé selon l'une quelconque des revendications précédentes, **caractérisé en ce que**

- des paramètres de fonctionnement de plusieurs composants de l'éolienne (100 ; 602) sont pris en compte pour déterminer la limite de perte de puissance actuelle ($P_{VL}$), et
- en particulier la limite de perte de puissance ($P_{VL}$) est déterminée de telle sorte que les paramètres de fonctionnement pris en compte ne dépassent pas des limites de paramètres prédéterminées, dans lequel
- sont pris en compte en particulier un, plusieurs ou tous les paramètres issus de la liste présentant
- une température de générateur,
- une température d'une unité d'alimentation (105),
- une température d'une ligne électrique, en particulier d'une ligne entre le générateur (101) et l'unité d'injection (105) pour transmettre une puissance électrique du générateur (101) à l'unité d'injection (105),
- une température d'une inductance électrique,
- une température d'un circuit secondaire d'un refroidissement actif,
- une magnétisation du générateur, dans lequel une saturation magnétique est utilisée comme limite de paramètre prédéterminée,
- une force électromagnétique générée dans le générateur (101), et
- une amplitude de vibration d'une vibration mécanique provoquée par le fonctionnement de l'éolienne (100 ; 602).

12. Procédé selon l'une quelconque des revendications précédentes, **caractérisé en ce que**

- la puissance d'augmentation ($P^+$), la perte de puissance actuelle ($P_V$) et/ou la limite de perte de puissance ($P_{VL}$), et/ou le couple limite pour le couple d'impact ($m_S$)
- en fonction d'un, de plusieurs ou de tous les critères sont déterminés à partir de la liste présentant
- un emplacement de l'éolienne (100 ; 602),
- une direction du vent,
- heure de la journée et/ou saison,
- une intensité de turbulence,
- un cisaillement du vent,
- des températures d'environnement
- une pression atmosphérique, et
- une humidité de l'air.

13. Procédé selon l'une quelconque des revendications précédentes, **caractérisé en ce que**

- pour faire fonctionner l'éolienne (100 ; 602) avec une puissance supérieure à la puissance nominale ($P_N$),
- les réglages de fonctionnement, en particulier l'angle de la pale ($\alpha_B$), en fonction de la vitesse actuelle du vent et en fonction de la puissance d'augmentation ($P^+$), de la perte de puissance actuelle ($P_V$) et/ou de la limite de perte de puissance ($P_{VL}$), et/ou
les réglages de fonctionnement sont déterminés par une règle de calcul.

**14.** Procédé selon l'une quelconque des revendications précédentes, **caractérisé en ce que**

- pour faire fonctionner l'éolienne (100 ; 602) en mode tempête lorsque la vitesse du vent est supérieure à une vitesse de vent de tempête prédéterminable, une courbe caractéristique de tempête est prévue qui donne une relation entre la vitesse de rotation et la puissance, dans lequel
- pour commander l'éolienne (100 ; 602) dans une transition du fonctionnement à pleine charge au fonctionnement en tempête, lorsque l'éolienne (100 ; 602) fonctionne en fonctionnement à pleine charge avec une puissance supérieure à la puissance nominale ($P_N$), une courbe caractéristique de transition est prévue qui donne une relation entre vitesse de rotation et puissance qui est différente de la relation selon la courbe caractéristique de tempête, dans lequel en particulier
- la courbe caractéristique de transition attribue des valeurs de puissance plus élevées à des valeurs de vitesse de rotation identiques par rapport à la courbe caractéristique de tempête.

**15.** Éolienne (100 ; 602) avec un rotor aérodynamique (106) à vitesse de rotation variable avec des pales de rotor (108) ajustables dans leur angle de pale ($\alpha_B$) et avec un générateur (101) pour générer une puissance de générateur, dans laquelle l'éolienne (100 ; 602) est **caractérisée par** une vitesse nominale ($n_N$), une puissance nominale ($P_N$) et une vitesse nominale du vent à laquelle la vitesse de rotation nominale ($n_N$) et la puissance nominale ($P_N$) sont atteintes, et dans laquelle l'éolienne (100 ; 602)

- présente un dispositif de commande pour commander l'éolienne (100 ; 602), **caractérisée en ce que** l'éolienne
- est préparée pour exécuter un procédé de commande d'une éolienne selon l'une quelconque des revendications précédentes, dans laquelle en particulier
- le dispositif de commande est préparé pour exécuter le procédé.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018171978 A1